(19) Europäisches Patentamt

European Patent Office

Office européen des brevets

(11) **EP 1 628 490 A1**

(12) **EUROPEAN PATENT APPLICATION**
published in accordance with Art. 158(3) EPC

(43) Date of publication:
22.02.2006 Bulletin 2006/08

(21) Application number: 04745337.8

(22) Date of filing: 26.05.2004

(51) Int Cl.:
*H04N 13/04* (1985.01)    *H04N 5/262* (1985.01)

(86) International application number:
PCT/JP2004/007185

(87) International publication number:
WO 2004/107764 (09.12.2004 Gazette 2004/50)

(84) Designated Contracting States:
DE FR GB

(30) Priority: 27.05.2003 JP 2003149881
10.06.2003 JP 2003165043
10.06.2003 JP 2003164599
26.09.2003 JP 2003336222

(71) Applicant: SANYO ELECTRIC CO., LTD.
Moriguchi-shi, Osaka-fu 570-8677 (JP)

(72) Inventors:
• HORIUCHI, Keiji
Anpachi-gun, Gifu 5030116 (JP)

• HORI, Yoshihiro
Gifu-shi, Gifu 5008233 (JP)
• YOSHIKAWA, Takatoshi
Ogaki-shi, Gifu 5030856 (JP)
• HAMAGISHI, Goro
Toyonaka-shi, Osaka 5610802 (JP)
• TAKEMOTO, Satoshi
Ogaki-shi, Gifu 5030852 (JP)
• MASHITANI, Ken
Neyagawa-shi, Osaka 5720839 (JP)

(74) Representative: Read, Matthew Charles et al
Venner Shipley LLP
20 Little Britain
London EC1A 7DH (GB)

(54) **IMAGE DISPLAY DEVICE AND PROGRAM**

(57) New functions including fade-in and fade-out are provided in view of particularity of three-dimensional image display. [means to solve the problem] During a fade-out process, a left-eye image (L image) is moved in a left direction while it is gradually reduced in size, and a right-eye image (R image) is moved in a right direction while it is gradually reduced in size. Thus, parallax between the L image and the R image is gradually increased. When the image is viewed through a 3D filter, it appears as if a subject to be displayed on a still image were gradually drawn in a depth direction. Furthermore, this effect can be magnified when the sizes of the L image and the R image are gradually reduced.

FIG. 6

## Description

### TECHNICAL FIELD

The present invention relates to an image display apparatus and a program, capable of having a viewer see a stereoscopic vision, and more specifically, relates to an image display apparatus and a program appropriately used when a fade-in or fade-out function is provided therefor.

### BACKGROUND ART

As an art of performing a stereoscopic vision, there have been known various methods such as a glasses-free stereoscopic vision method using a parallax barrier, a glasses-using stereoscopic vision method using polarized glasses, liquid crystal shutter glasses, etc., and other methods Furthermore, regarding images to be viewed stereoscopically, besides a live-action image, there is an image created by a 3-D rendering, that is, a rendering process in which an object arranged in a virtual space is projected on planes by using computer graphics. In addition, by performing the rendering process in two viewpoints, it becomes possible to create a right-eye image and a left-eye image. Further, a stereoscopic image receiving device and a stereoscopic image system are proposed, with which a stereoscopic image is generated based on two-dimensional video signals and depth information extracted from the two-dimensional video signals (see Japanese Patent Laying-open No. 2000-78611). By creating an image file including the two-dimensional image and the depth information, a stereoscopic image can be generated when the created image file is opened. Moreover, a method with which two images are broadcasted as an image for one channel so that the stereoscopic vision can be implemented on a receiving apparatus side is proposed (see Japanese Patent Laying-open No. H10-174064). By creating an image file including the two images, a stereoscopic image can be generated when the created image file is opened.

Meanwhile, in the field of image display, so-called fade-in and fade-out functions are often used. Such functions are commonly used when an image or a program is changing, and enable special display effects which, for example, could attract an interest of a viewer.

Various methods enabling the fade-in or fade-out function have already been considered and developed in the field of two-dimensional image display. For example, Japanese Patent Laying-open No. H7-170451 discloses such a technique that when an image is faded in using circular wiping which is gradually enlarged, a display effect at the time that an image is faded in is further enhanced by stopping the enlargement of the circular wiping once during the operation.

## SUMMARY OF THE INVENTION

### PROBLEM SOLVED BY THE INVENTION

However, such the fade-in and fade-out functions have not been considered or examined very much in the field of three-dimensional image display. If the fade-in and fade-out functions utilizing particularity of stereoscopic display in three-dimensional image display can be provided, it is possible to attract much more interest of the viewer as compared with a case where the conventional fade-in and fade-out functions developed for the two-dimensional display are used as they are in the three-dimensional image display. If the fade-in and fade-out functions utilizing the particularity of the stereoscopic display in the three-dimensional image display can be provided, it is also possible to provide image transition effects that are even more effective.

To this end, it is an object of the present invention to provide new fade-in and fade-out functions and the like utilizing the particularity of the three-dimensional image display.

### MEANS TO SOLVE THE PROBLEM

According to the present invention, there is provided a display effect such that a subject to be displayed appears to be backing away in a fade-out operation and approaching in a fade-in operation by changing parallax generated by a right-eye image and a left-eye image.

Characteristics of the present invention according to claims are as follows.

The present invention according to claim 1 relates to an image display apparatus which displays a right-eye image and a left-eye image on a display screen, and the apparatus comprises a display controlling means for controlling display of the right-eye image and the left-eye image on the display screen, in which the display controlling means includes a means for controlling arrangement of the right-eye image and the left-eye image on the display screen so that the right-eye image and the left-eye image are moved away from each other in predetermined directions in a lapse of time in a fade-out process.

The present invention according to claim 2 relates to an image display apparatus according to claim 1, in which the display controlling means further includes a means for controlling the right-eye image and the left-eye image so that their sizes are reduced from their original sizes with time in a lapse of time in the fade-out process.

The present invention according to claim 3 relates to the image display apparatus according to claim 1 or 2, in which when a data-vacant portion is generated in a display region of the left-eye image and a display region of the right-eye image in the fade-out process, next left-eye image or right-eye image is applied to this data-vacant portion.

The present invention according to claim 4 relates to an image display apparatus which displays a right-eye image and a left-eye image on a display screen, and the apparatus comprises a display controlling means for controlling display of the right-eye image and the left-eye image on the display screen, in which the display controlling means includes a means for controlling arrangement of the right-eye image and the left-eye image on the display screen so that the right-eye image and the left-eye image are moved close to each other from predetermined directions in a lapse of time in a fade-in process.

The present invention according to claim 5 relates to the image display apparatus according to claim 4, in which the display controlling means further includes a means for controlling the right-eye image and the left-eye image so that their sizes are increased to their original sizes in a lapse of time in the fade-in process.

The present invention according to claim 6 relates to a program allowing a computer to execute a three-dimensional stereoscopic image display for displaying a right-eye image and a left-eye image on a display screen, and the program has the computer execute a display controlling process for controlling display of the right-eye image and the left-eye image on the display screen, in which the display controlling process includes a process for controlling arrangement of the right-eye image and the left-eye image on the display screen so that the right-eye image and the left-eye image are moved away from each other in predetermined directions in a lapse of time in a fade-out process.

The present invention according to claim 7 relates to a program according to claim 6, in which the display controlling process further includes a process for controlling the right-eye image and the left-eye image so that sizes thereof are reduced from original sizes thereof in a lapse of time in the fade-out process.

The present invention according to claim 8 relates to a program according to claim 6 or claim 7, in which, when a data-vacant portion is generated in a display region of the left-eye image and a display region of the right-eye image in the fade-out process, a next left-eye image or right-eye image is applied to this data-vacant portion.

The present invention according to claim 9 relates to a program allowing a computer to execute a three-dimensional stereoscopic image display for displaying a right-eye image and a left-eye image on a display screen, and the program has the computer execute a display controlling process for controlling display of the right-eye image and the left-eye image on the display screen, in which the display controlling process comprises a process for controlling arrangement of the right-eye image and the left-eye image on the display screen so that the right-eye image and the left-eye image are moved close to each other from predetermined directions in a lapse of time in a fade-in process.

The present invention relates to a program according to claim 9, in which the display controlling process further includes a process for controlling the right-eye image and the left-eye image so that sizes thereof are increased to original sizes thereof in a lapse of time in the fade-in process.

Furthermore, the present invention also provides a transition effect in which when subjects to be displayed are managed as objects, each object is faded out from the screen or faded in on the screen.

That is, the present invention relates to an image display apparatus which displays original image data in which subjects to be displayed are managed as objects, as a stereoscopic image, and the apparatus comprises a designating means for designating an object to be faded in or faded out from among the objects, a transition effect setting means for setting a transition effect in the designated object, a stereoscopic image data generating means for generating stereoscopic image data by using the object in which the transition effect is set and another object, and a displaying means for displaying the generated stereoscopic image data.

Here, the object designating means may comprise a means for determining anteroposterior relation of each object and selecting the object to be faded in or faded out based on the determined result. Thus, the objects can be sequentially faded out from the hithermost object at the time of deleted operation, for example.

Furthermore, the transition effect setting means of the present invention may set a transmissivity for the designated object as the object to be faded in or faded out according to proceeding of the fade-in and fade-out. In this case, the stereoscopic image data generating means of the present invention takes out display pixels of the designated object according to the set transmissivity and draws an object provided behind into the pixels after the pixel data is taken out. According to this configuration, the object to be deleted gradually disappears, while the object provided behind the above object is allowed to come out at the time of the fade-out process, for example. Therefore a transition effect can be stereoscopically and realistically implemented.

In addition to the above characteristics, a color of the designated object can be made light or dark according to the proceeding of the transition. In this case, the realistic sensation can be more improved at the time of fade-in and fade-out processes.

It is noted that, the present invention can be applied to a program which provides functions of the above apparatus or each means for a computer. The following invention is provided as a program.

The present invention according to claim 14 relates to a program allowing a computer to execute to display original image data in which subjects to be displayed are managed as objects, as a stereoscopic image, and the program has the computer execute an object designating process for designating an object to be faded in or faded out from among the objects, a transition effect setting process for setting a transition effect in the designated object, a stereoscopic image data generating process for generating stereoscopic image data by using the object in which the transition effect is set and another object, and a displaying process for displaying the generated stereoscopic image data.

The present invention according to claim 15 relates to a program according to claim 14, in which the above program may also be such that the object designating process includes a process for determining an anteroposterior relation of each object and selecting the object to be faded in or faded out based on the determined result.

The present invention according to claim 16 relates to a program according to claim 14 or 15, in which the transition effect setting process includes a process for setting a transmissivity for the designated object, and the stereoscopic image data generating process includes a process for taking out display pixels of the designated object according to the set transmissivity and incorporating an object provided behind into the pixels after the display pixel data is taken out.

In addition to the above characteristics, a color of the designated object can be made light or dark as the transition effect proceeds. In this case, the realistic sensation can be more improved at the time of fade-in and fade-out processes.

Furthermore, according to the present invention, a display plane is quasi-turned so that one end of the display plane comes to a front side and the other end of the display plane goes to a rear side. As a result, a currently displayed image is deleted from a front surface to a back surface, and an image to be displayed next is allowed to appear from the back surface to the front surface. At this time, geometric figure information when the display plane in a predetermined rotating state is viewed from a view point for stereoscopic vision is found by an arithmetic calculation process, or geometric figure information for each view point previously found by an arithmetic calculation process is read out from a storing means and one display image is mixed by applying an image to be displayed (the currently displayed image or the image to be displayed next) to the geometric figure from each view point.

When such display image is viewed through a three-dimensional filter and the like, the display plane is constantly changed by the quasi-turning and the image on this display plane can be stereoscopically viewed. Thus, the viewer can see movement and stereoscopic effect at the same time, so that the fade-in and fade-out operations can be implemented realistically because of a multiplier effect.

The characteristics of the present invention according to claims are as follows.

The present invention according to claim 17 relates to an image display apparatus and the apparatus comprises a geometric figure providing means for providing information of a geometric figure provided when a display plane in a predetermined rotating state is viewed from a previously assumed view point in a case the display plane is quasi-turned so that one end of the display plane comes to a front side and the other end of the display plane goes to a rear side, an image size changing means for changing a size of an image for each view point according to the geometric figure of the above view point, and a display image generating means for generating a display image by mixing the image for each view point of whose size is changed.

The present invention according to claim 18 relates to an image display apparatus according to claim 17, in which, when the image for each view point is provided as image data for three-dimensional display, the image size changing means frames image data for two-dimensional display from the image data for each view point and acquires the image for each view point based on the image data for the two-dimensional display.

The present invention according to claim 19 relates to an image display apparatus according to claim 17 or 18, in which, the processes by the image size changing means and the display image generating means are performed for the currently displayed image of each view point until an angle of the quasi-turning reaches 90°, and the processes by the image size changing means and the display image generating means are performed for the image of each view point which is to be displayed next until the angle of the quasi-turning reaches 180° from 90°.

The present invention according to claim 20 relates to an image display apparatus according to any one of claims 17 to 19, in which the geometric figure providing means includes a storing means for storing the geometric figure information of each view point so as to correspond to the rotation angle and sets the geometric figure information of each view point when the display plane is quasi-turned so that one end of the display plane comes to a front side and the other end of the display plane goes to a rear side, based on the geometric figure information stored in the storing means.

The present invention according to claim 21 relates to a program allowing a computer to execute display an image, and the program has the computer execute a geometric figure providing process for providing information of a geometric figure provided when a display plane in a predetermined rotating state is viewed from a previously assumed view point in a case the display plane is quasi-turned so that one end of the display plane comes to a front side and the other end of the display plane goes to a rear side, an image size changing process for changing a size of an image for each view point according to the geometric figure of the above view point, and a display image generating process for generating a display image by mixing the image for each view point of which size is changed.

The present invention according to claim 22 relates to a program according to claim 21, in which, when the image for each view point is provided as image data for three-dimensional stereoscopic display, the image size changing process frames image data for two-dimensional display from the image data for each view point and acquires the image for each view point based on the image data for the two-dimensional display.

The present invention according to claim 23 relates to a program according to claim 21 or 22, in which the processes by the image size changing process and the display image generating process are performed for the currently displayed image of each view point until an angle of the quasi-turning reaches 90°, and the processes by the image size changing process and the display image generating process are performed for the image of each view point which is to be displayed next until an angle of the quasi-turning reaches 180° from 90°.

The present invention according to claim 24 relates to a program according to any one of claims 21 or 22, in which the geometric figure providing process includes a data base for storing the geometric figure information of each view point so as to correspond to the rotation angle and sets the geometric figure information of each view point when the display plane is quasi-turned so that one end of the display plane comes to a front side and the other end of the display plane goes to a rear side, based on the geometric figure information stored in the data base.

In addition, when the process according to claim 18 or claim 22 is performed by a series of arithmetic calculation process, the process for generating the image data for the two-dimensional display may be omitted and the image for each view point may be obtained directly from the image data for the three-dimensional stereoscopic display.

Moreover, the image display apparatus according to the present invention may comprise the following process as the process corresponding to the fade-in and face-out operations. That is, an image display apparatus according to the present invention is an image display apparatus which drives display based on image data, and comprises a means for generating mixed image data by mixing a pixel value of currently displayed image data and a pixel value of image data to be displayed next by a designated ratio, and a display switch controlling means for designating the ratio so that the ratio of the pixel value of the currently displayed image data is gradually reduced to be finally 0% in a predetermined time when a stereoscopic image is switched to another stereoscopic image, the stereoscopic image is switched to a planar image, or the planar (two-dimensional) image is switched to the stereoscopic image.

In addition, an image display apparatus according to the present invention is an image display apparatus which drives a display based on image data, and comprises a means for changing a pixel value of currently displayed image data to a pixel value of image data to be displayed next, and a display switch controlling means for designating a switch pixel so that a ratio of the pixel value of the currently displayed image data is gradually reduced to be finally 0% in a predetermined time when a stereoscopic image is switched to another stereoscopic image, the stereoscopic image is switched to a planar (two-dimensional) image, or the planar image is switched to the stereoscopic image. In such the configuration, the display switch controlling means may designate the switch pixel so that a width or the number of line-shaped or block-shaped regions is increased on a screen.

With such the above configurations, since the switch from the stereoscopic image to another stereoscopic image, from the stereoscopic image to the planar image, or from the planar image to the stereoscopic image is not performed instantaneously but performed gradually, the parallax is gradually changed and a sense of discomfort can be reduced.

Furthermore, a program according to the present invention is a program allowing a computer to function as a means for driving display based on image data, a means for generating mixed image data by mixing a pixel value of currently displayed image data and a pixel value of image data to be displayed next by a designated ratio, and display switch controlling means for designating the ratio so that the ratio of the pixel value of the currently displayed image data is gradually reduced to be finally 0% in a predetermined time when a stereoscopic image is switched to another stereoscopic image, the stereoscopic image is switched to a planar (two-dimensional) image, or the planar image is switched to the stereoscopic image.

Furthermore, a program according to the present invention is a program allowing a computer to function as a means for driving a display based on a image data, means for changing a pixel value of currently displayed image data to a pixel value of image data to be displayed next, and a display switch controlling means for designating a switch pixel so that a ratio of the pixel value of the currently displayed image data is gradually reduced to be finally 0% in a predetermined time when a stereoscopic image is switched to another stereoscopic image, the stereoscopic image is switched to a planar (two-dimensional) image, or the planar image is switched to the stereoscopic image. Moreover, in such the configuration, the computer may be allowed to function as a means for designating the switch pixel so that a width or the number of line-shaped or block-shaped regions is increased on a screen.

## EFFECT OF THE INVENTION

As described above, according to the present invention, the new fade-in and fade-out functions using the particularity of the three-dimensional image display can be provided. In addition, according to the present invention, when the subject to be displayed is managed as the object, while the transition effect in which each object gradually disappears from the screen and gradually appears on the screen can be provided, each object can be stereoscopically viewed. A multiplier effect of the transition effect and the stereoscopic effect can implement the realistic fade-in and fade-out operations. Furthermore, since the switch from the stereoscopic image to another stereoscopic image, from the stereoscopic image to the planar image, or from the planar image to the stereoscopic image is performed gradually, the parallax is gradually changed and a sense of discomfort can be reduced.

## DESCRIPTION OF THE PREFERRED EMBODIMENTS

The following description of embodiments makes characteristics of the present invention clearer. However, the following embodiments are only examples of the present invention, and the present invention and meaning of terms of components are not limited to the following embodiments.

The following describes the embodiments of the present invention with reference to the drawings.

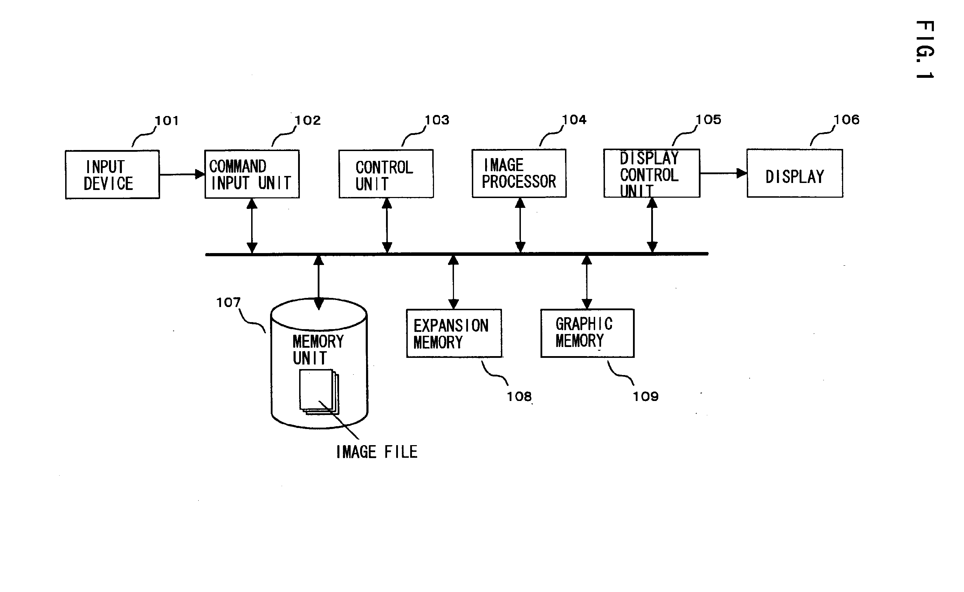

At first, Fig. 1 shows a configuration of an image display apparatus according to the embodiment of the present invention. As shown in Fig. 1, the image display apparatus comprises an input device 101, a command input unit 102, a control unit 103, an image processor 104, a display control unit 105, a display 106, a memory unit 107, an expansion memory 108, and a graphic memory 109.

The input device 101 includes input means such as a mouse, a keyboard and the like, which is used when a reproduced image is organized or edited or a command such as a reproduction command, an image sending command, fade-in and fade-out commands or the like is input. The command input unit 102 receives various kinds of commands input from the input device 101 and sends the commands to the control unit 103. The control unit 103 controls each unit according to the input command from the command input unit 102.

The image processor 104 processes right-eye image data and left-eye image data expanded in the expansion memory 108 according to the command forwarded from the control unit 103, and generates image data for displaying which constitutes one screen. Then, the generated image data for displaying is mapped on the graphic memory 109.

The display control unit 105 sends the image data stored in the graphic memory 109 to the display 106 according to the command from the control unit 103. The display 106 displays the image data received from the display control unit 105 on the display screen.

The memory unit 107 is a database to store a plurality of image files and image data including a certain number of still image data are stored in each image file. Here, each still image data comprises the right-eye image data and the left-eye image data to display a three-dimensional stereoscopic image.

The expansion memory 108 is a RAM (Random Access Memory) and used when the still image data (right-eye image data and left-eye image data) to be reproduced which has been read out from the memory unit 107 by the image processor 104 is temporally stored. The graphic memory 109 is a RAM and sequentially stores image data for three-dimensional display generated by the image processor 104.

Next, the following describes an operation of the image display apparatus. A normal reproducing operation is explained first.

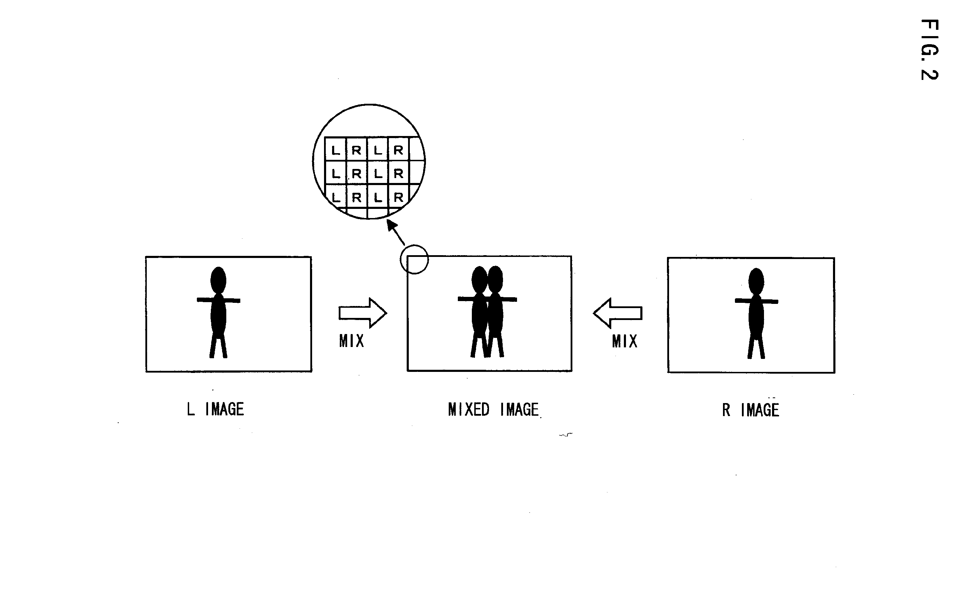

When an image reproducing command for a certain file is input to the image display apparatus, the first still image data (right-eye image data and left-eye image data) in the still image data which constitutes the certain file is read out by the image processor 104 and expanded on the expansion memory 108. Then, the image processor 104 maps the right-eye image data and the left-eye image data on the graphic memory 109 so that a right eye image (R image) and a left eye image (L image) are arranged on the screen as shown in Fig. 2.

In addition, in the drawing, R shows a display region (pixel) for the right-eye image on the screen, and L shows a display region (pixel) for left-eye image on the screen. Allocation of such display region is determined according to a configuration of a three-dimensional filter. That is, the display regions (pixels) of the right eye image and the left eye image are allotted so that the right-eye image is projected to a right eye of a viewer and the left-eye image is projected to a left eye of the viewer when the display image is viewed through the three-dimensional filter.

Thus, the image data mapped on the graphic memory 109 is sent to the display 106 by the display control unit 105 and displayed on the display screen.

Then, when a sending command of the still image is input from the input device 101, the right-eye image data and the left-eye image data of the next still image which constitutes the above-mentioned file are expanded on the expansion memory 108 and the same processes as the above are executed. Thus, similar to the above, each time the sending command is input, the right-eye image data and the left-eye image data are expanded on the expansion memory 108 and the above processes are executed. Thus, the still images which constitute the file are sequentially displayed on the display 106.

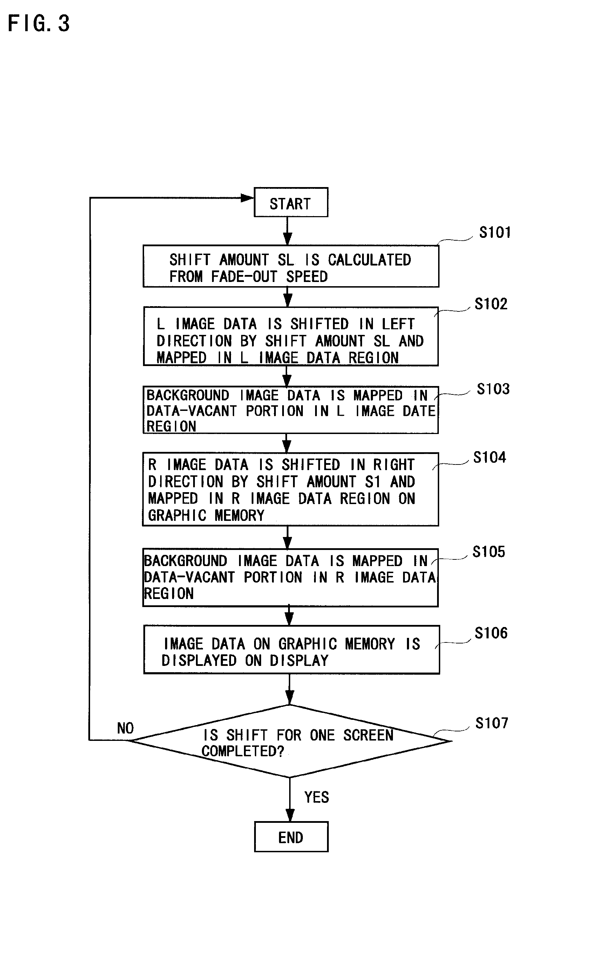

Next, the following describes an operation of a fade-out process. Fig. 3 shows a process flow when a fade-out command is input. In addition, in the following description, reference characters DR1 and DL1 designate currently reproduced and displayed right-eye image data and left-eye image data, respectively, and the reference characters DR2 and DL2 designate right-eye image data and left-eye image data which are to be reproduced and displayed next, respectively.

When the fade-out command is input, a shift amount SL is calculated from a predetermined fade-out speed (S101). Here, the shift amount SL means a shift amount when the right-eye image and the left-eye image are shifted in a right direction and a left direction, respectively from the positions on the display screen and displayed. This shift amount is set by pixel (SL = N pixels: N is a natural number), for example.

Thus, when the shift amount SL is calculated, the left-eye image data DL1 is shifted in the left direction by the shift amount SL and mapped in a left-eye image data region on the graphic memory 109 (S102). Then, the left-eye image data DL2 to be displayed next is mapped in a data-remaining portion after the mapping in a left-eye image data region (S103).

Thus, after the shifting operation for the left-eye image data is completed, a shifting operation for the right-eye image data is executed similarly. That is, the right-eye image data DL1 is shifted in the right direction by the shift amount SL and mapped in a right-eye image data region on the graphic memory 109 (S104). Then, the right-eye image data DL2 to be displayed next is mapped in a data-remaining portion after the mapping in a right-eye image data region (S105).

Thus, when the mapping process to the graphic memory 109 is completed, the image data on the graphic memory 109 is transferred to the display 106. Thus, the image in which a distance between the right-eye image and the left-eye image becomes wider in the right and left directions, respectively by several pixels as compared with a normal image and the next right-eye image and left-eye image are drawn in a data-vacant portion generated by the wider distance is displayed on the display 106 (S106).

The above processes S101 to S106 are continuously executed until the right-eye image and the left-eye image totally disappear from the display screen (S107). In addition, when the shift amount SL is fixed, the process flow shown in Fig. 3 is changed so that the process is returned to S 102 from S 107. According to the process flow shown in Fig. 3, the shift amount SL is reset when the process returns to S101 from S107. Thus, more active fade-out operation can be implemented.

More advanced fade-out process can be implemented by increasing or decreasing the shift amount at accelerating pace, for example. Such a process can be easily implemented when how the shift amount is changed with time period is expressed by a relation between a time or the number of process cycles and the shift amount using a function.

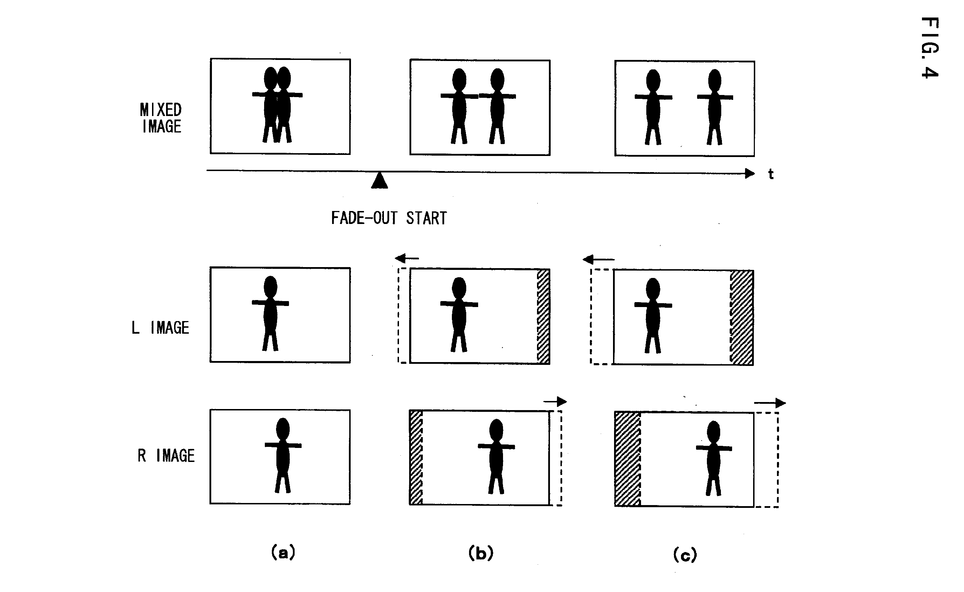

Portions (a) and (c) in Fig.4 show an example of the image display at the time of the above-described process. A portion (a) in Fig.4 shows display states before the fade-out command is input, a portion (b) in Fig.4 shows display states after the fade-out command is input and the first process cycle (S101 to S106) is performed, and a portion (c) in Fig.4 shows display states after the fade-out command is input and the second process cycle is performed, in which a mixed image, the left-eye image (L image) and the right-eye image (R image) are compared. In addition, a display of the next still images is omitted in the mixed images in Fig. 4 for convenience.

As shown in the portion (b) in Fig.4, after the first process cycle is performed, the L image is moved in the left direction by several pixels and a data-vacant portion (diagonal hatching part) is generated at a right end of the L image display region. In this area, a corresponding part of the next L image is drawn. Similarly, the R image is moved in the right direction by several pixels and a data-vacant portion (diagonal hatching part) is generated at a left end of the R image display region. In this area, a corresponding part of the next R image is drawn.

In the mixed image on the top in the portion (b) in Fig.4 which is framed by the first process cycle, the L image and the R image are arranged in such a manner as to get away from each other in the left and right directions as compared with the state shown in the portion (a) in Fig.4. Therefore, parallax between the L image and the R image becomes larger as compared with the state shown in the portion (a) in Fig.4. As a result, the same objects (human figure in this drawing) on the L image and the R image are recognized drawn in a depth direction as compared with the display shown in the portion (a) in Fig.4.

Furthermore, when the next process cycle is performed, the L image and the R image are arranged in such a manner as to further get away from each other as shown in the portion (c) in Fig.4, and accordingly, the parallax between the L image and the R image becomes larger. As a result, the same objects on the L image and the R image are recognized further drawn in the depth direction.

Thus, according to the process flow shown in Fig. 3, the fade-out operation is executed such that while the displayed still images are gradually drawn in the depth direction, the next still images are gradually displayed.

In addition, although the R image and the L image are moved in the right and left directions in the above process, this assumes that the horizontal parallax is set in the L image and the R image. Therefore, if the direction of the parallax is vertical or diagonal, the images are moved in that direction. In addition, when the L image and the R image are moved in the same direction at the same time, since the images are moved while the parallax is maintained, a stereoscopic vision itself is not affected and only a variety of transition effects can be enhanced.

Next, the following describes an operation at the time of a fade-in process. Contrary to the fade-out operation, the next left-eye image (L image) and the next right-eye image (R image) gradually come into the display screen from the left and right directions respectively in a display screen at the time of such the fade-in operation.

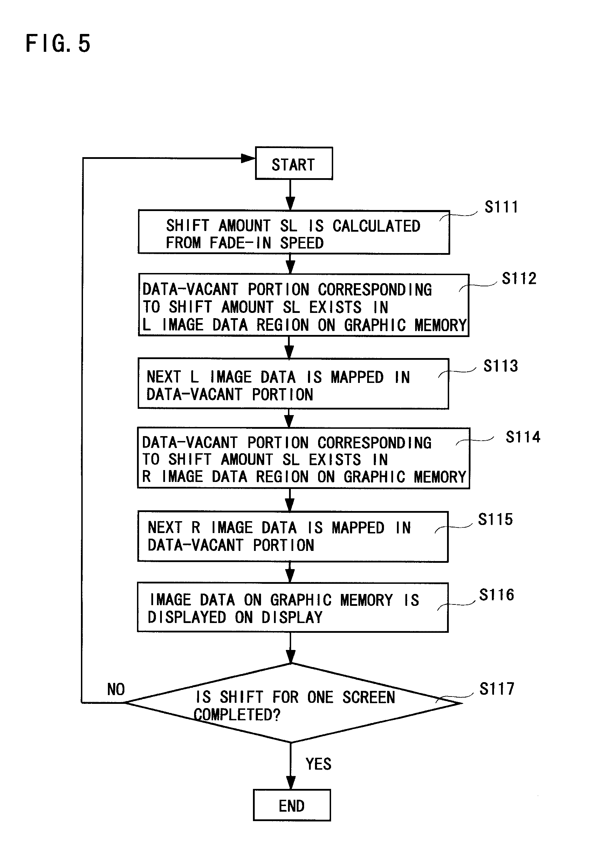

Fig. 5 shows a process flow when a fade-in command is input. In addition, in the following description, reference characters DR1 and DL1 designate the currently reproduced and displayed right-eye image data and the left-eye image data, respectively, and the reference characters DR2 and DL2 designate right-eye image data and left-eye image data which are to be reproduced and displayed next, respectively.

When the fade-in command is input, a shift amount SL is calculated from a predetermined fade-in speed (S111). Here, the shift amount SL means an approach amount when the R image and the L image come into the display screen in the right direction and the left direction, respectively. This shift amount is set by pixel (SL = N pixels: N is a natural number), for example.

Thus, when the shift amount SL is calculated, a data-vacant portion corresponding to this shift amount SL exists at a left end of the left image data region on the graphic memory 109 (S112). Then, the next left-eye image data DL2 is mapped in this data-vacant portion (S113). In addition, the previous left-eye image data DL1 is still maintained in the left image data region other the data-vacant portion.

Thus, after the approaching operation of the left-eye image data is completed, an approaching operation of the right-eye image data is executed similarly. That is, a data-vacant portion corresponding to this shift amount SL exists at a right end of the right image data region on the graphic memory 109 (S114). Then, the next right-eye image data DL2 is mapped in this data-vacant portion (S 115). In addition, the previous right-eye image data DR1 is still maintained in the right image data region other than the data-vacant portion.

Thus, when the mapping processes on the graphic memory 109 are completed, the image data on the graphic memory 109 is transferred to the display 106. Thus, the image in which the next L image and R image come from the left and right directions by several pixels toward the currently displayed L image and the R image is displayed on the display 106 (S 116).

The above processes S111 to S116 are continuously executed until the R images and the L images are all displayed on the display screen (S 117). In addition, when the shift amount SL is fixed, the process flow shown in Fig. 5 is changed so that the operation is returned to S 112 from S 117. According to the process flow shown in Fig. 5, the shift amount SL is reset when the operation returns to S111 from S117. Thus, more active fade-in operation can be implemented.

More advanced fade-in process can be implemented by increasing or decreasing the shift amount at accelerating pace, for example. Such the process can be easily implemented when how the shift amount is changed with time period is expressed by a relation between a time or the number of process cycles and the shift amount using a function.

According to the above process flow, since the next L image and the next R image come into the display screen so that the parallax is gradually reduced, the fade-in operation in which while the next still image is gradually brought forward so that the next still image is gradually largely displayed can be implemented.

In addition, although the R image and the L image are moved from the right and left directions in the above process, this assumes that the horizontal parallax is set in the L image and the R image. Therefore, if the direction of the parallax is vertical or diagonal, the R image and the L image are moved in that direction. In addition, when the L image and the R image are moved from the same direction at the same time, since the images are moved while the parallax is maintained, the stereoscopic vision itself is not affected and only a variety of transition effects can be enhanced.

Incidentally, according to the above embodiment, when the R image is moved in the right direction at the time of the fade-out process shown in Fig. 3, for example, a right end part of the R image which is protruded by this movement is not displayed on the screen. Similarly, when the L image is moved in the left direction, a left end part of the L image which is protruded by this movement is not displayed on the screen. Therefore, only a center part excluding the protruded left and right ends in the part which constitutes one still image is projected to the right and left eyes of the viewer at the same time in the fade-out operation.

Thus, although a smooth fade-out effect can be provided when the still image at the time of fade-out operation has an characteristic object in the center, when the still image at the time of fade-out operation has the characteristic object in a position shifted from the center, since the object is not projected to both right and left eyes at the same time at the time of the fade-out operation, the above fade-out effect, that is, a display effect such that the object is drawn in the depth direction is not likely to be attained.

The same is true in the case of the fade-in process. When the next still image does not have a characteristic object in the center, an effective fade-in operation is not likely to be provided.

Accordingly, in the following embodiment, in order to display all of the L image and R image on the screen, after the R image and the L image are appropriately scaled down, both images are moved in the right and left directions.

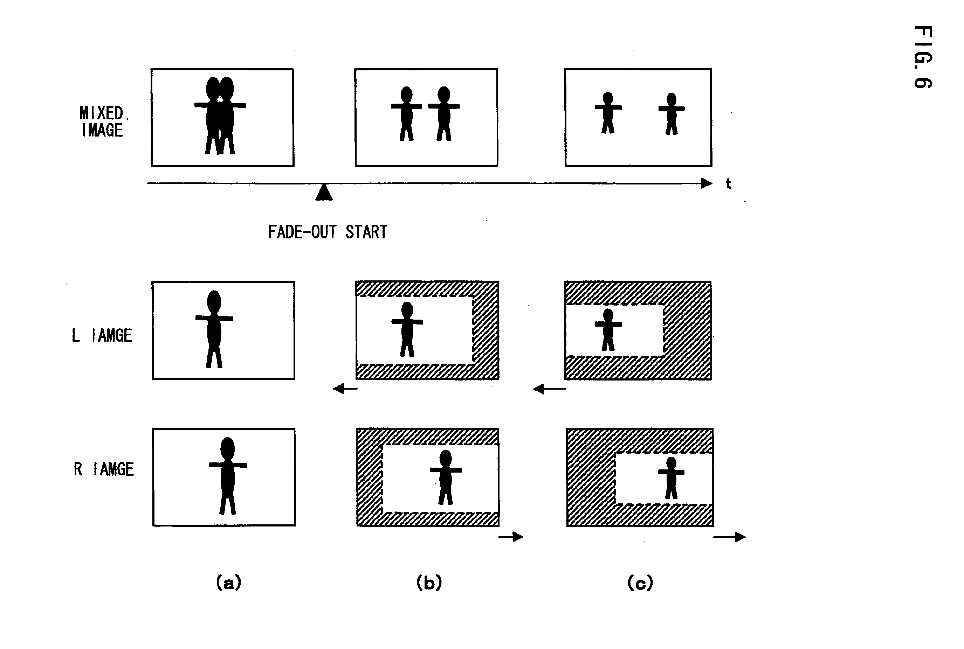

Fig. 6 shows an image display example at the time of the fade-out process according to this embodiment. As shown in Fig. 6, according to the this embodiment, the left-eye image (L image) and right-eye image (R image) are scaled down by a predetermined reduction ratio at the time of fade-out and the scaled-down images are moved in the left and right directions, respectively until a boundary of each scaled-down image comes into contact with a boundary of a display screen. Thus, even in the case of the still image which does not have the characteristic object in the center, an effective fade-out operation can be implemented. In addition, since the images are scaled down and then separated from each other, it seems that the images are further drawn in the depth direction as compared with the case where the images are separated without being scaled down.

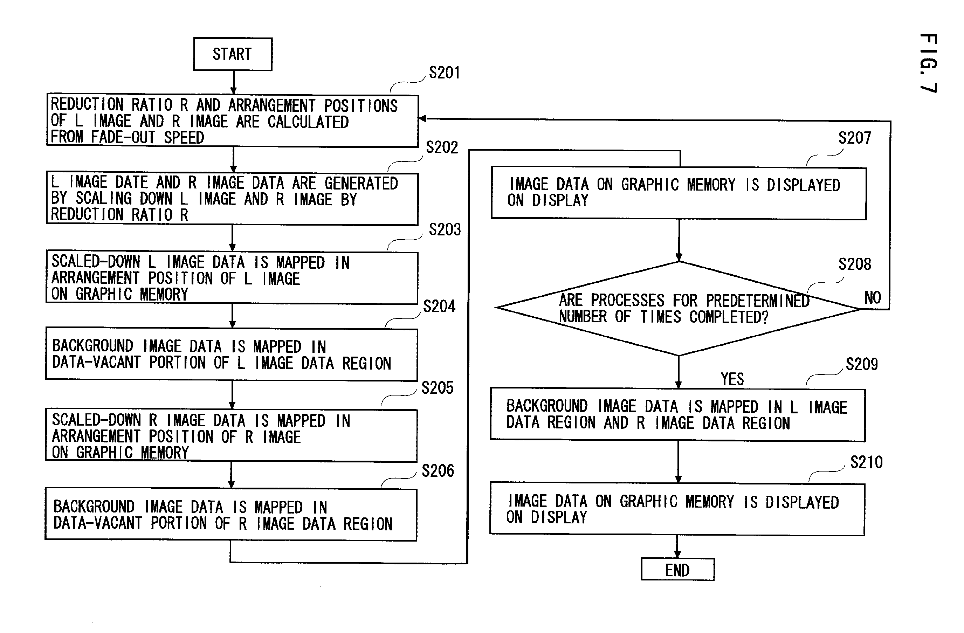

Fig. 7 shows a process flow at the time of the fade-out operation. In addition, in the following description, reference characters DR1 and DL1 designate currently reproduced and displayed right-eye image data and left-eye image data, and reference characters DR2 and DL2 designate right-eye image data and left-eye image data which are reproduced and displayed next.

When a fade-out command is input, a reduction ratio R and arrangement positions of the L image and the R image are calculated from a predetermined fade-out speed (S201). Here, as described above, the arrangement positions of the L image and the R image are set such that a left-side boundary of the L image and a right-side boundary of the R image come into contact with the boundary of the display screen, respectively. In addition, the reduction ratio R is set as a reduction ratio for the currently displayed L image and the R image.

Thus, when the reduction ratio R and the arrangement positions of the L image and the R image are set, the left-eye image data DL1 and the right-eye image data DR1 are scaled down by the reduction ratio R which was calculated (S201), and the scaled-down left-eye image data DL1 and the right-eye image data DR1 are generated (S202).

Then, at S203, the left-eye image data DL1 after scaled down is mapped in a region corresponding to the arrangement position of the L image which was set (S201). Then, the left-eye image data DL2 to be displayed next is mapped in a data-remaining portion after the mapping in a left-eye image data region (S204).

Thus, after the mapping process of the left-eye image data is completed, the mapping process of the right-eye image data is implemented similarly. That is, the right-eye image data DR1 after scaled down is mapped in a region corresponding to the arrangement position of the R image which was set at S201 in the right-eye image data region on the graphic memory 109 at S205. Then, the right-eye image data DR2 to be displayed next is mapped in a data-remaining portion after the mapping in a right-eye image data region (S206).

Thus, when the mapping processes of both image data are completed, the image data on the graphic memory 109 is transferred to the display 106. Thus, the mixed image shown on the top in a portion (b) in Fig.6 is displayed on the display 106 (S207).

A process cycle of the S201 to S207 is executed by a predetermined number of cycles at S208. Thus, as shown in Fig. 6, the L image and the R image are gradually separated while being scaled down and a mixed image in which the next L image and the R image are drawn in a blank space is displayed.

After the process cycle of S201 to S207 is repeated by the predetermined number of times, only the next left-eye image data DL2 and the right-eye image data DR2 are mapped in the left-eye data region and the right-eye data region, respectively on the graphic memory 109 (S209). Then, the image data is transferred to the display 106 and a mixed image consisting of only the next L image and the R image is displayed on the display 106 at S210.

In addition, the reduction ratio R may be fixed to a predetermined value, or the reduction ratio R may vary in each process cycle (a cycle from S201 to S207) in order to implement the fade-out effect more actively. In addition, instead of the above setting method, the arrangement positions of the L image and the R image after scaled down may be set such that the boundaries of the L image and the R image after scaled down get away from the boundary of the display screen.

Furthermore, both reduction ratio and shift amount may be variably set. A greater variety of fade-out processes can be realized by combining variation of the reduction ratio and variation of the shift amount.

Although, in the above process, the R image and the L image are moved in the right and left directions, respectively, this is assumed that the horizontal parallax is set in the L image and the R image. Therefore, if the direction of the parallax is vertical or diagonal, the images are moved in that direction. In addition, when the L image and the R image are moved in the same direction at the same time, since the images are moved while the parallax is maintained, the stereoscopic vision itself is not affected and only a variety of transition effects can be enhanced.

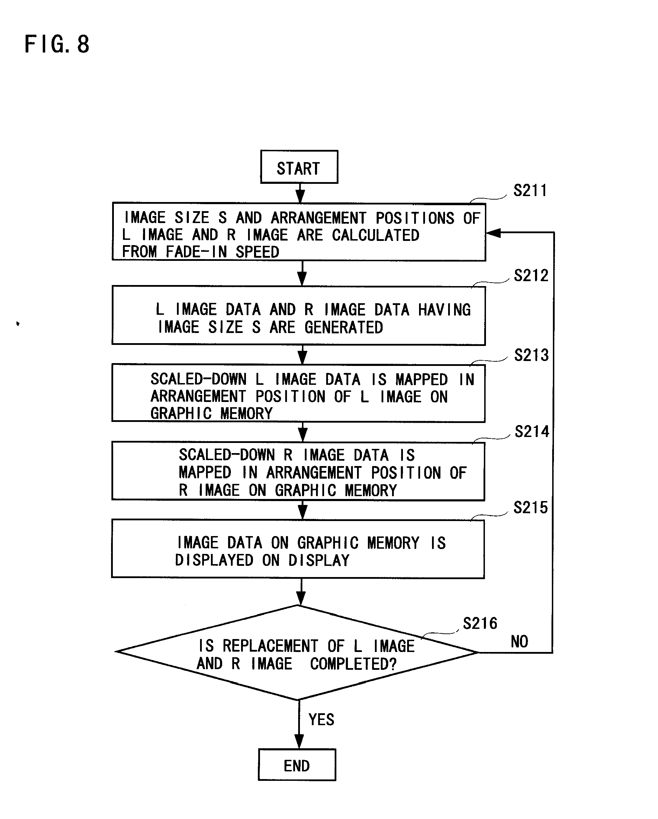

Fig. 8 shows a process flow when a fade-in command is input. In addition, contrary to the fade-out operation shown in Fig.7, in a display screen at the time of fade-in operation, the next left-eye and right-eye images are gradually scaled up in a state a left-side boundary of the next left-eye image and a right-side boundary of the next right-eye image are in contact with the boundary of the display screen, respectively.

When the fade-in command is input, an image size S and arrangement positions of the L image and the R image are calculated from a predetermined fade-in speed at S211. Here, as described above, the arrangement positions of the L image and the R image are provided such that the left-side boundary of the L image and the right-side boundary of the R image are in contact with the boundary of the display screen, respectively. In addition, a size of each of the arrangement regions of the L image and the R image is set depending on the image size S.

When the image size S and the arrangement positions of the L image and the R image are set as described above, the next left-eye image data DL2 and the next right-eye image data DR2 are processed using the set image size S and the left-eye image data DL2 and right-eye image data DR2 having the image size S are generated (S212).

Then, the left-eye image data DL2 having the image size S is mapped in a region corresponding to the arrangement position of the L image set at S211 in the left image data region on the graphic memory 109 (S213). In addition, the previous left-eye image data DL1 is maintained as it is in the left image data region other than the region used at the time of the mapping.

Thus, when the arrangement process for the left-eye image data is completed, an arrangement process for the right-eye image data is executed. That is, the right-eye image data DR2 having the image size S is mapped in a region corresponding to the arrangement position of the R image set at S211 in the right image data region on the graphic memory 109 (S214). In addition, the previous right-eye image data DR1 is maintained as it is in the right image data region other than the region used at the time of the mapping.

Thus, when the mapping processes on the graphic memory 109 are completed, the image data on the graphic memory 109 is transferred to the display 106. Thus, a mixed image in which the next L image and R image are scaled down to the predetermined size and drawn in the boundary of the screen is displayed on the display (S215).

The above process cycle of S211 to S215 is repeated until only the next L image and R image are displayed on the display screen (S216). The image size S for each process cycle is set to be larger than the image size S for a preceding cycle by a predetermined ratio. Accordingly, the arrangement regions of the L image and the R image are also scaled up in comparison with the arrangement regions in the preceding cycle.

Therefore, each time the process cycle of S211 to S215 is repeated, the next L image and the R image on the display screen are gradually scaled up. In addition, the display regions of both images are expanded from the right end and left end to the center and a distance between both images is reduced. As a result, parallax between both images is gradually reduced.

Thus, according to the above fade-in process, since the L image and the R image are gradually scaled up and the parallax between both images is gradually reduced, the still image seems to protrude more forward as compared with the case where the parallax between the L image and the R image is simply reduced as shown in the process flow in Fig. 5. In addition, since the L image and the R image do not protrude from the screen, even when a characteristic object is not included in the center of the still image, an effective fade-in operation can be implemented.

In addition, both enlargement ratio and shift amount may be variably set. A greater variety of fade-in processes can be implemented by combining a variation of the enlargement ratio and the variation of the shift amount.

In addition, although the R image and the L image are moved from the right and left directions, respectively in the above process, this assumes that the horizontal parallax is set in the L image and the R image. Therefore, if the direction of the parallax is vertical or diagonal, they are moved from that direction. In addition, when the L image and the R image are moved in the same direction at the same time, since the images are moved while the parallax is maintained, the stereoscopic vision itself is not affected and only a variety of transition effects can be enhanced.

Although the fade-out process and the fade-in process peculiar to the three-dimensional display are implemented by gradually changing the display positions of the L image and the R image and the reduction ratio and the enlargement ratio as described above, more flexible fade-in process and fade-out process can be implemented by combining the above-described process with a process method used in a field of two-dimensional display such as a transition process in which the screen is gradually made darker or brighter or the number of pixels is reduced or increased at the time of fading out or fading in, for example.

Although the shift amount is freely set in the above described fade-out and fade-in processes, since stereoscopic vision is not implemented if the parallax exceeds a distance between both eyes of a human (about 65 mm), it is necessary to set the shift amount such that the parallax does not exceed the distance between both eyes and execute the process cycle in order to perform all of the fade-out and fade-in processes in a range of the stereoscopic vision. For example, it is necessary to contrive a method such as to start the fade-in process from a shifted position corresponding to the distance between both eyes.

However, when the scale-up and the scale-up and the two-dimensional transition process are both used and the fade-out and fade-in processes are performed based on these processes, the fade-out and fade-in processes of the three-dimensional display can be performed within the parallax of the distance between both eyes. That is, in the fade-out process in which the image gradually becomes small, since the fade-out process is completed when the image becomes smaller and disappears, in a case where the shifting process for shifting the image by the shift amount can be considered to be an additional process, the fade-out process can be completed without moving the image to the end of the display region.

Such fade-out process can be implemented by methods in which a distance between both eyes is previously set and the shift amount is set so that the parallax does not exceed the distance between both eyes in the whole processes when the shift amount for each process cycle is calculated, or the shift amount is set at zero when the parallax exceeds the distance between both eyes, and the like.

Meanwhile, although the present invention is applied to a two-eye type image display apparatus in the above embodiment, the present invention can be also applied to an image display apparatus having more than two image-taking view points.

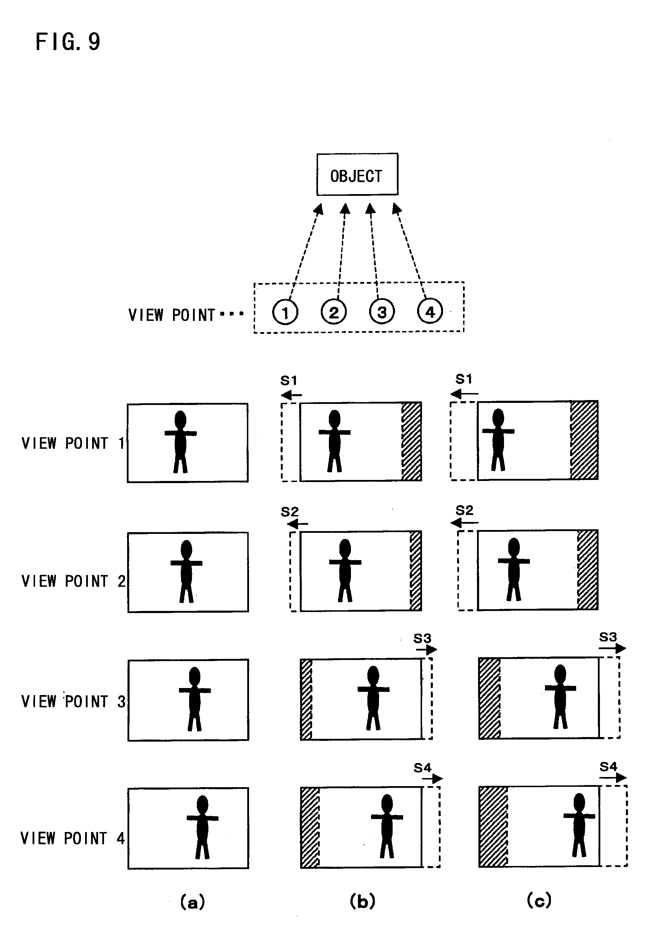

As an example, Fig. 9 shows an image display example in a case where the invention according to the fade-out process shown in Fig. 3 is applied to a four-eye type image display apparatus. A portion (a) in Fig.9 shows an image display state of each view point before the fade-out command is input, a portion (b) in Fig. 9 shows an image display state of each view point after the fade-out command is input and a first process cycle is executed, and a portion (c) in Fig.9 shows an image display state of each view point after the fade-out command is input and a second process cycle is executed.

As shown in Fig. 9, the images of view points 1 and 2 are moved in the left direction and the images of view points 3 and 4 are moved in the right direction at the time of the fade-out operation. At this time, slide amounts (S1, S2, S3 and S4) of respective view points in each cycle are set as follows.

$$S1 = S4 > S2 = S3 \ldots \qquad (1)$$

Thus, a distance D12 between the images of the view points 1 and 2, a distance D23 between the images of the view points 2 and 3, a distance 34 between the images of the view points 3 and 4 are gradually increased every process cycle. Therefore, the parallax between the image projected to the left eye and the image projected to the right eye is gradually increased as the fade-out operation proceeds regardless of whether the viewer sees the display screen from the view points 1 and 2, the view points 2 and 3, or the view points 3 and 4. As a result, the same fade-out effect as in the process flow shown in Fig. 3 can be provided.

In addition, when the slide amounts are set such that the above equation (1) is satisfied, the image of the view points 1 and 4 disappear from the display screen prior to the image of the view points 2 and 3. Therefore, when the viewer sees the display screen from the view points 1 and 2, for example, the image of view point 1 disappears first and the effective fade-out operation cannot be implemented thereafter. Therefore, in this case, the image of the view point 2 is also to be deleted at the same time when the image of the view point 1 disappears, so that only the next images of the view points 1 and 2 are displayed on the display screen. The same is true of the images of the view points 3 and 4.

In the fade-in operation, the images are moved in directions opposite to that of the fade-out operation shown in Fig. 9. In addition, as described above, since the images of the view points 1 and 4 disappear from the display screen prior to the images of the view points 2 and 3 in the fade-out operation as described above, in the fade-in operation contrary thereto, the images of the view points 2 and 3 are to be produced into the display screen prior to the images of the view points 1 and 4.

In addition, when the image size is gradually reduced like the fade-out process shown in Fig. 7, the image process may be performed so that the image size in each process cycle is gradually reduced, while setting the slide amount as shown in Fig. 9. At this time, the image size is set in each process cycle so that the boundaries of the images of the view points 1 and 4 may be in contact with the boundary of the display screen, for example. In this case, since the images of the view points 2 and 3 are moved later than the images of the view points 1 and 4, their boundaries are always apart from the boundary of the display screen.

According to the image process as described above, regardless of whether the viewer sees the displayed image from the view points 1 and 2, view points 2 and 3, or the view points 3 and 4, the parallax between the image projected to the left eye and the image projected to the right eye is gradually increased as the fade-out operation proceeds, and the image of each view point is gradually reduced in size as the fade-out operation proceeds. As a result, the same fade-out effect as in the process flow shown in Fig. 7 can be provided.

In the fade-in operation, the image is moved in the direction opposite to that in the fade-out operation. That is, the image of each view point (image to be faded in) is moved in the direction opposite to the above and enters the display screen so as to be gradually scaled up.

In addition, the moving process of the images of the four view points is performed by the process for generating the display image data by the image processor 104 and the mapping process on the graphic memory 109 similar to the embodiment of the image of the two view points. In this case, the image data of each view point is stored in the memory unit 107. Then, the image data of each view point is shifted by a predetermined amount and mapped in a data region for each view point on the graphic memory 109 as it is or after reduced to a predetermined size. Thus, the moving processes of the images of the four view points are performed.

Although the embodiments of the present invention have been described, it is needless to say that the present invention is not limited to the above embodiments and various kinds of modifications can be made.

For example, although the next still image which constitutes the image file is displayed after the fade-out operation in the above embodiment, it is needless to say that a background image may be displayed instead.

Various kinds of modifications can be added to the embodiment of the present invention in the same or equivalent scope of the technical idea of the present invention.

In addition, the three-dimensional stereoscopic image display apparatus according to the embodiment can be implemented when a function shown in Fig. 1 is provided in a personal computer and the like. In this case, a program for implementing the function shown in Fig. 1 is obtained by mounting a disk or downloaded to the personal computer via the Internet. The present invention can be generally appreciated as the program for adding such functions to computers. Hereinafter, an embodiment of the present invention is described with reference to the drawings.

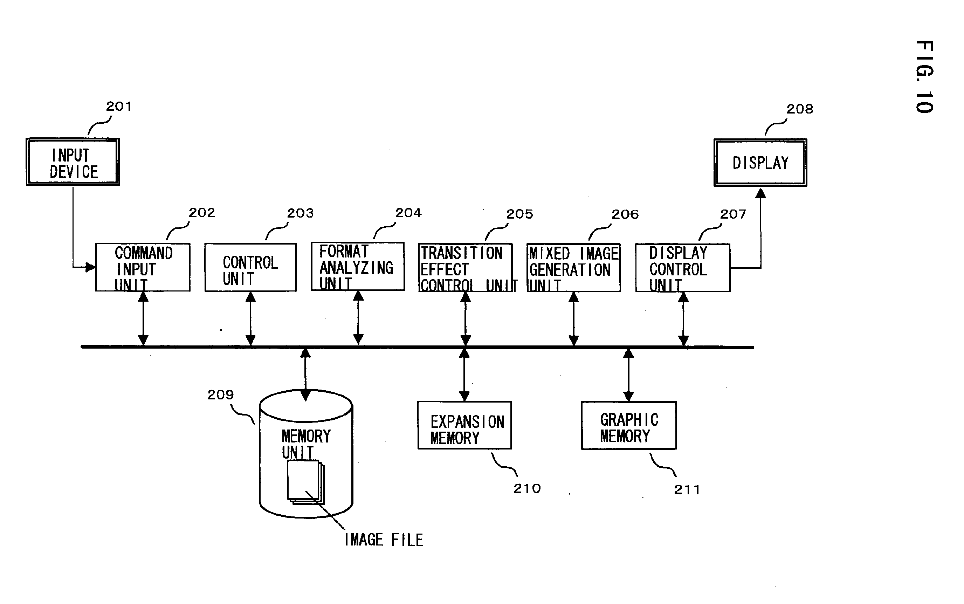

Fig. 10 shows a configuration of an image display apparatus according to another embodiment of the present invention. In addition, according to this embodiment, prime image data is a CG (Computer Graphics) data and three-dimensional image data is generated by tracing the CG data from a predetermined view point.

As shown in Fig. 10, the image display apparatus comprises an input device 201, a command input unit 202, a control unit 203, a format analyzing unit 204, a transition effect control unit 205, a mixed image generation unit 206, a display control unit 207, display 208, a memory unit 209, an expansion memory 210 and a graphic memory 211.

The input device 201 includes input means such as a mouse, a keyboard or the like, which is used when a reproduced image is drawn or edited or a command such as a reproduction command, an image sending command, fade-in and fade-out commands or the like is input. The command input unit 202 sends various kinds of commands input from the input device 201 to the control unit 203. The control unit 203 controls each unit according to the input command transferred from the command input unit 202.

The format analyzing unit 204 analyzes CG data of an image to be reproduced and distinguishes the number of objects included in the image or arrangement position of each object, an anteroposterior relation between the objects, and the like. Then, the result of distinction is sent to the transition effect control unit 205 and the mixed image generation unit 206. In addition, a detail of the process in the format analyzing unit 204 will be described later.

The transition effect control unit 205 executes and controls a transition effect process in response to a fade-in command or a fade-out command is input from the input device 201. In addition, a detail of the process in the transition effect control unit 204 will be described later.

The mixed image generation unit 206 generates left-eye image data and right-eye image data from the CG data expanded in the expansion memory 210 and maps these data on the graphic memory 211. Furthermore, when a transition effect command is input from the transition effect control unit 205, it generates left-eye image data and right-eye image data to which the transition effect is given and maps these data to the graphic memory 211. In addition, a detail of the process in the mixed image generation unit 206 will be described later.

The display control unit 207 sends image data stored in the graphic memory 211 to the display 208 according to a command from the control unit 203. The display 208 displays the image data received from the display control unit 207 on the display screen.

The memory unit 209 is a database to store a plurality of image files, and a predetermined number of still image data is stored in each image file. Here, each still image data is CG data in this embodiment.

The expansion memory 210 is a RAM (Random Access Memory) and it is used when the still image data which was read out from the memory unit 209 is temporally stored. The graphic memory 211 is a RAM and sequentially stores image data for three-dimensional stereoscopic display generated by the mixed image generation unit 206.

Next, a format analyzing process by the format analyzing unit 204 and a process for generating the left-eye image data and the right-eye image data by the mixed image generation unit 206 is described.

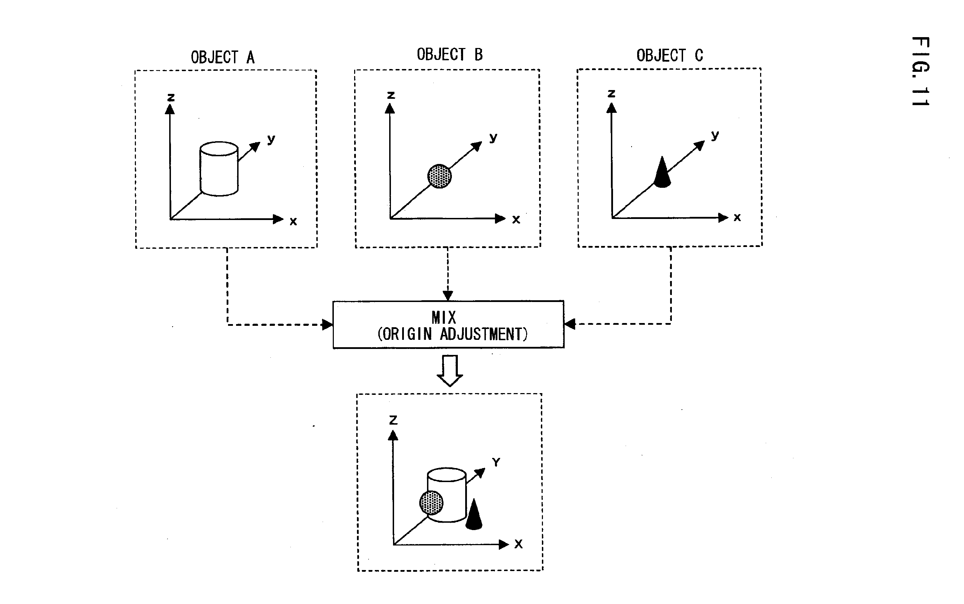

First, referring to Fig. 11, a description is given about a method of defining the object by the CG data and a process when each object is arranged in a three-dimensional space. In addition, Fig 11 shows a process principle when objects A, B and C are arranged in the three-dimensional space.

Each of the objects A to C is defined by an outline on a three-dimensional coordinate axis and an attribute (a pattern, a color, and the like) of the outline surface as shown in an upper part of Fig. 11. Each object is arranged in the three-dimensional space by positioning an origin of the coordinate axis of each object on the coordinate axis which defines the three-dimensional space as shown in a lower part of Fig. 11.

In addition, information for positioning the origin of the coordinate axis of each object on the coordinate axis which defines the three-dimensional space is contained in the CG data of each object. In addition, information regarding the outline of each object and the attribute of the outline surface is also contained in the CG data. It is noted that information other than the above is shown in CG standard such as X3D, and the like, and its description will be omitted here.

The format analyzing unit 204 determines an anteroposterior relation of each object when the three-dimensional space is viewed from a predetermined view point for stereoscopic vision by analyzing the CG data which defines each object. Then, the information regarding the anteroposterior relation is sent to the transition effect control unit 205 and the mixed image generation unit 206 together with the information regarding the number of objects contained in the image and the arrangement position of each object.

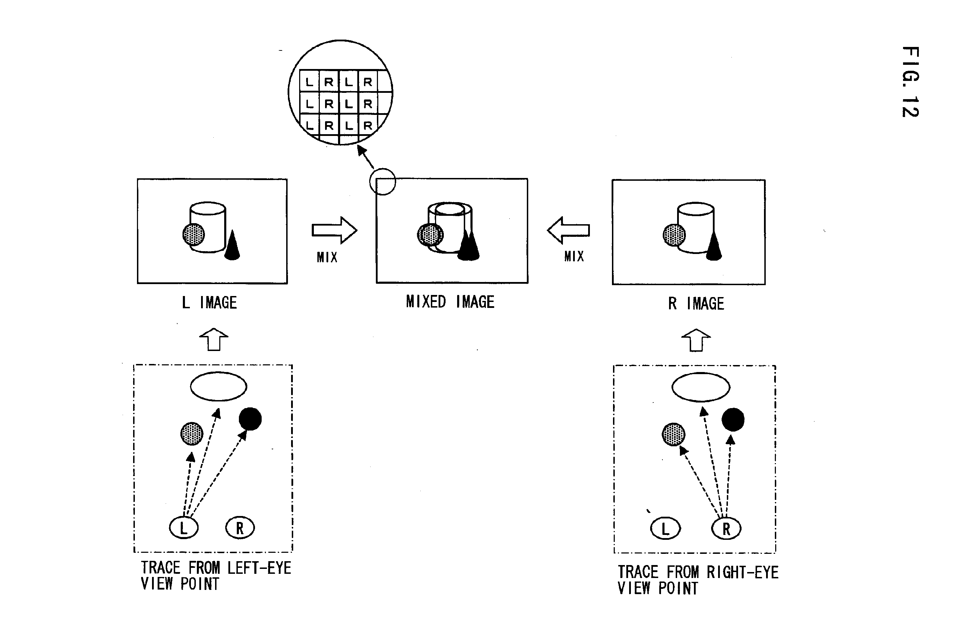

At the time of a normal reproduction, the mixed image generation unit 206 traces the three-dimensional space from a left-eye view point (L) and a right-eye view point (R) and generates left-eye image data (image data for left eye) and right-eye image data (image data for right eye) as shown in Fig. 12. Then, the left-eye image data (L image data) and the right-eye image data (R image data) are mapped on the graphic memory 211 so that the left-eye image (L image) and the right-eye image (R image) are arranged on the screen as shown in a partially enlarged view of the upper center in Fig. 12, for example.

It is noted that the partially enlarged view, "R" designates a display region (pixel) of the right-eye image on the screen and "L" designates a display region (pixel) of the left-eye image on the screen. Such the allotment of the display regions is determined according to a configuration of a three-dimensional filter. That is, the display regions (pixels) of the R image and the L image are allotted so that the R image and the L image may be projected to the right eye and the left eye of the viewer, respectively when the displayed image is viewed through the three-dimensional filter.

At the time of a fade-in operation or a fade-out operation, the mixed image generation unit 206 generates the left-eye image data and the right-eye image data by performing a process for expressing in a transparent manner the object to be faded in or faded out which is instructed by the transition effect control unit 205.

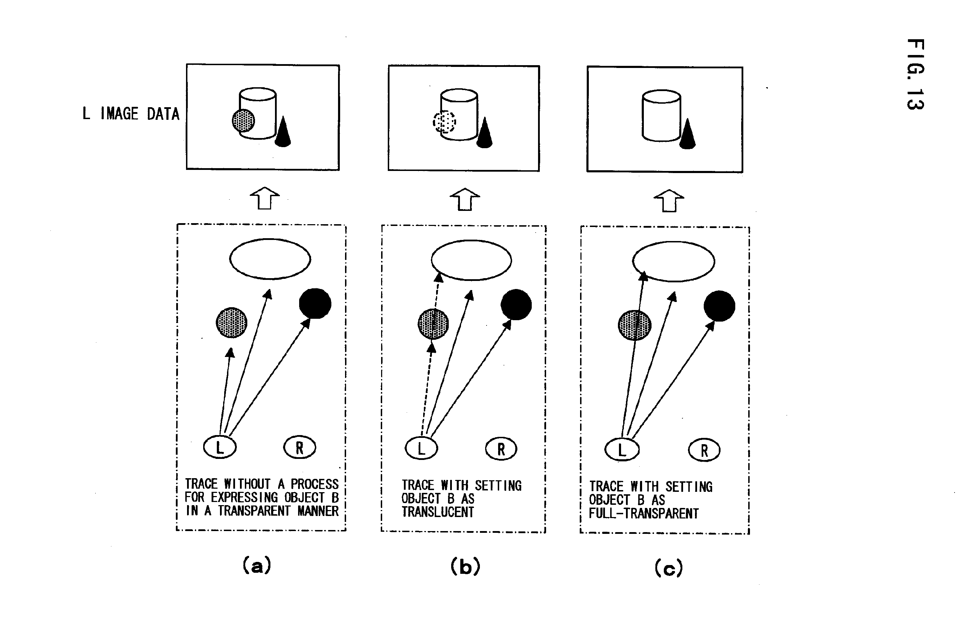

Portions (a) to (c) in Fig. 13 show a generation process of the left-eye image data. In addition, the portion (a) in Fig. 13 shows a state in which transmissivity is not set for the spherical object, the portion (b) in Fig. 13 shows a state in which the spherical object is made translucent and the portion (c) in Fig. 13 shows a state in which the spherical object is made full-transparent.

According to the portion (a) in Fig.13, since a process for expressing the spherical object in a transparent manner is not performed, the image data for left eye is the same as in the case of a normal reproduction.

According to the portion (b) in Fig.13, since the spherical object is made translucent, the image data for left eye is generated by tracing a sphere and the background thereof according to a transmissivity of the spherical object. For example, when the transmissivity of the spherical object is set at 30%, 70% of the image data for left eye of the spherical region is image data obtained by tracing the sphere (pixels in this region are uniformly taken out) and 30% thereof is image data obtained by tracing an object of the background of the sphere. In addition, when there is no object in the background of the sphere, image data of a background image is used.

According to a portion (c) in Fig.13, since the spherical object is full-transparent, at the time of tracing, only the background of the spherical object is traced to generate the image data for left eye.

In addition, similarly, the image data for right eye is generated by tracing the sphere and its background according to a transmissivity of the spherical object. In addition, the image data for left eye and the image data for right eye are generated by a similar process also when the transmissivity is set for the other objects.

Next, the following describes an operation of the image display apparatus. First, a description is given about a normal reproducing operation.

When a command for reproducing an image of a certain file is input to the image display apparatus, the first still image data (CG data) in the still image data which constitute that file is read out and expanded on the expansion memory 210. Then, the mixed image generation unit 206 generates the right-eye image data and the left-eye image data from the read image data as described above. Then, the generated right-eye image data and left-eye image data are mapped on the graphic memory 211.

Thus, the image data mapped on the graphic memory 211 is sent to the display 208 by the display control unit 207 and displayed on the display screen. Then, when a command for sending the sill image is input from the input device 201, the next still image data (CG data) which constitutes the file is expanded on the expansion memory 210 and the same process as in the above is executed. Similarly, every time when the sending command is input, the next still image data is expanded on the expansion memory 210 and the above process is executed. Thus, the still image which constitutes the file is sequentially displayed on the display 208.

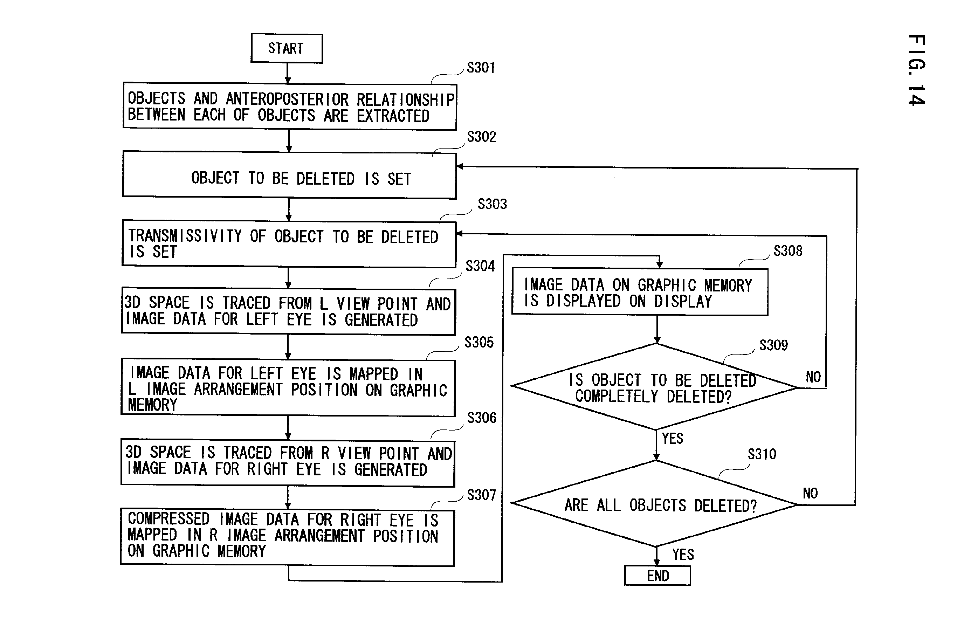

Next, the following describes an operation at the time of the fade-out process. Fig. 14 shows a process flow at the time of the fade-out process. When a fade-out command is input, the transition effect control unit 205 extracts objects on the screen and an anteroposterior relation between each of the objects when viewed from an L view point and an R view point based on an analysis result from the format analyzing unit 204 (S301). Then, the hithermost object is set as an object to be deleted (S302). In addition, an object other than the hithermost object can be set as an object to be deleted.

Then, the transition effect control unit 205 sets a transmissivity of the object to be deleted (S303) and sends this transmissivity and identification information of the object to be deleted to the mixed image generation unit 206. Then, the mixed image generation unit 206 traces the three-dimensional space from the L view point to generate the image data for left eye based on the transmissivity and the identification information of the object to be deleted (S304) as described above referring to Fig. 13. At this time, an object which has not appeared yet is traced as full-transparent. Then, the generated image data for left eye is mapped on an L image data region on the graphic memory 211 (S305). Similarly, the composite image generation unit 206 traces the three-dimensional space from the R view point to generate the image data for right eye (S306) and maps the data in an R image data region on the graphic memory 211 (S307).

Thus, when the mapping processes on the graphic memory 211 are completed, the image data on the graphic memory 211 is transferred to the display 208 and thus, the mixed image in which the L view point image and the R view point image are mixed is displayed and displayed on the display 208 (S308). Then, it is determined whether or not the object to be deleted is completely deleted (transmissivity is 100%) and when the object is not completely deleted, the operation returns to S303 and the transmissivity is increased one step and the above processes are repeated.

The processes of S303 to S308 are repeated until the object to be deleted is completely deleted (S309). Then, when the object to be deleted is completely deleted, it is determined whether or not all of the objects on the screen are completely deleted (S310) and when it is NO, the operation returns to S302 and a new object is set as the object to be deleted. The object to be deleted is an object which is positioned nearest when viewed from the L view point and the R view point among the remaining objects on the screen, for example. Then, when all of the objects on the screen are completely deleted, the fade-out process is completed (S310).

Next, the following describes an operation of the fade-in process. It is noted that this fade-in process is executed by performing procedures opposite to those in the fade-out process.

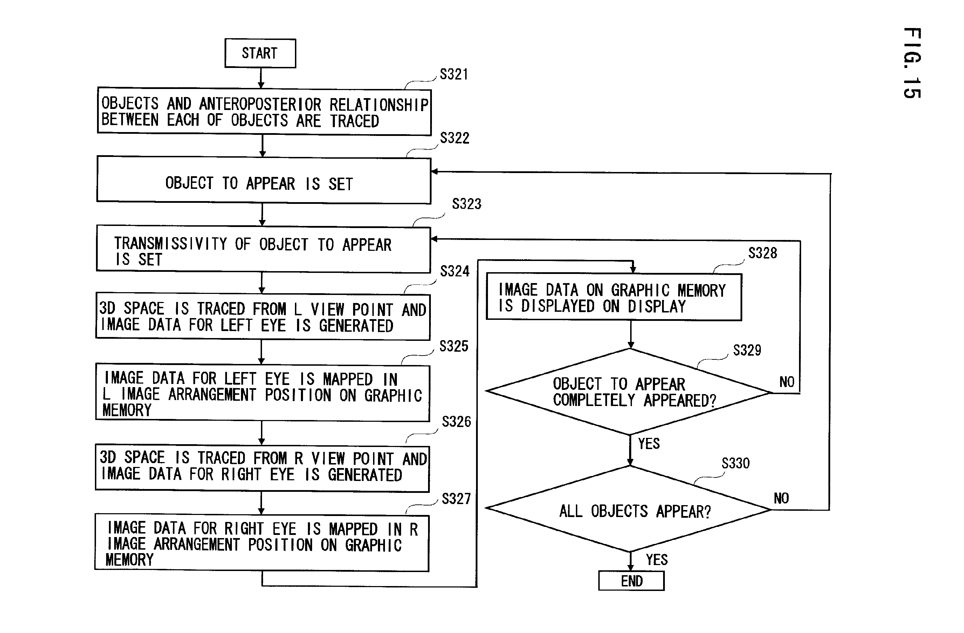

Fig. 15 shows a process flow of the fade-in process. When a fade-in command is input, the transition effect control unit 205 extracts objects on the screen and an anteroposterior relation between each of the objects when viewed from the L view point and the R view point, based on an analysis result from the format analyzing unit 204 (S321). Then, the furthermost object is set as an object to appear (S322). In addition, an object other than the furthermost object can be set as the object to appear.

Then, the transition effect control unit 205 sets a transmissivity of the object to appear (S323), and sends this transmissivity and identification information of the object to appear to the mixed image generation unit 206. Then, the mixed image generation unit 206 traces the three-dimensional space from the L view point to generate the image data for left eye based on the transmissivity and the identification information of the object to appear as described above referring to Fig. 13 (S324). Then, the generated image data for left eye is mapped on the L image data region on the graphic memory 211 (S325). Similarly, the three-dimensional space is traced from the R view point and the image data for right eye is generated (S326) and this is mapped on the R image data region of the graphic memory 211 (S327).

Thus, when the mapping processes on the graphic memory 211 are completed, the image data on the graphic memory 211 is transferred to the display 208 and thus, the mixed image in which the L view point image and the R view point image are mixed is displayed and displayed on the display 208 (S328). Then, it is determined whether or not the object to be deleted completely appears (transmissivity is 0%) and when it does not completely appears, the operation returns to S323 and the transmissivity is decreased one step and the above process is repeated.

The processes of S323 to S328 are repeated until the object to appear is completely appear (S329). Then, when the object to appear completely appears, it is determined whether or not all of the objects on the screen completely appear (S330) and when it is NO, the operation returns to S322 and a new object is set so as to appear. The object to appear is an object which is positioned furthermost when viewed from the L view point and the R view point among the objects which have not appeared on the screen yet. Then, when all of the objects completely appear on the screen, the fade-in process is completed (S330).

As described above, according to this embodiment, since the object in each state can be viewed stereoscopically while the object is sequentially deleted or allowed to appear, the fade-out and fade-in operations can be realistically implemented.

In addition, although the object is deleted or allowed to appear by taking out the displayed pixels in the above embodiment, a color of the object to be deleted or the object to appear may be made darker or lighter according to a degree of the transition effect instead of the above or together with the above.

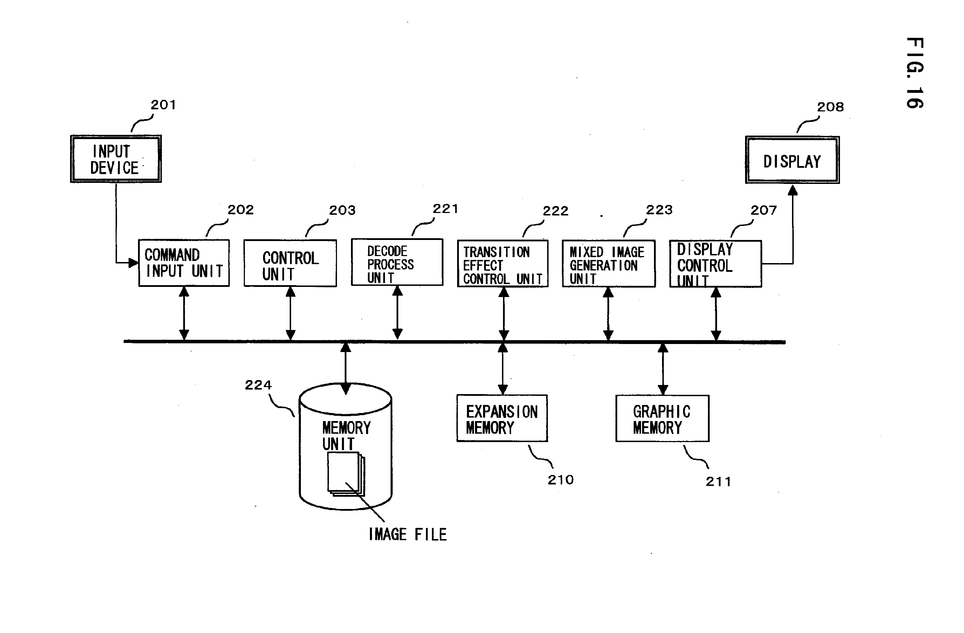

Fig. 16 shows a configuration of an image display apparatus according to another embodiment. In addition, according to this embodiment, prime image data is MPEG data and according to the prime data, a background image and an object to be drawn in this background image are previously prepared every view point for stereoscopic vision and stored in the memory unit.

As shown in Fig. 16, the image display apparatus includes the input device 201, the command input unit 202, the control unit 203, a decode process unit 221, a transition effect control unit 222, a mixed image generation unit 223, the display control unit 207, the display 208, a memory unit 224, the expansion memory 210 and the graphic memory 211. Here, configuration other than the decode process unit 221, the transition effect control unit 222, the mixed image generation unit 223 and the memory unit 224 is the same as the configuration in the above embodiment (refer to Fig. 10).

The decode process unit 221 decodes the MPEG data of an image to be reproduced and expands the decoded image data in the expansion memory 210. Moreover, the decode process unit 221 extracts the number of objects contained in the image and arrangement position of each object and an anteroposterior relation between the objects and the extraction result is sent to the transition effect control unit 222 and the mixed image generation unit 223. In addition, a detail of the process in the decode process unit 221 is described later.

The transition effect control unit 222 executes and controls a transition effect process in response to a fade-in command or a fade-out command input from the input device 201. In addition, a detail of the process in the transition effect control unit 222 is described later.

The mixed image generation unit 223 generates left-eye image data and right-eye image data from the MPGE data expanded in the expansion memory 210 and maps the data on the graphic memory 211. In addition, when a transition effect command is input from the transition effect control unit 222, the mixed image generation unit 223 generates left-eye image data and right-eye image data to which the transition effect is provided and maps the data to the graphic memory 211. In addition, a detail of the process in the mixed image generation unit 223 is described later.

The memory unit 224 is a database to store a plurality of image files, and image data including a predetermined number of still images is stored in each image file. Here, each still image data is MPEG data in this embodiment and composed of image data for an L view point and image data for an R view point. In addition, each of the image data for the L view point and the image data for the R view point comprises data (as is described below) regarding a background and an object drawn on that.

Next, a decoding process in the decode process unit 221 and a generation process of the left-eye image data and the right-eye image data in the mixed image generation unit 223 are described.

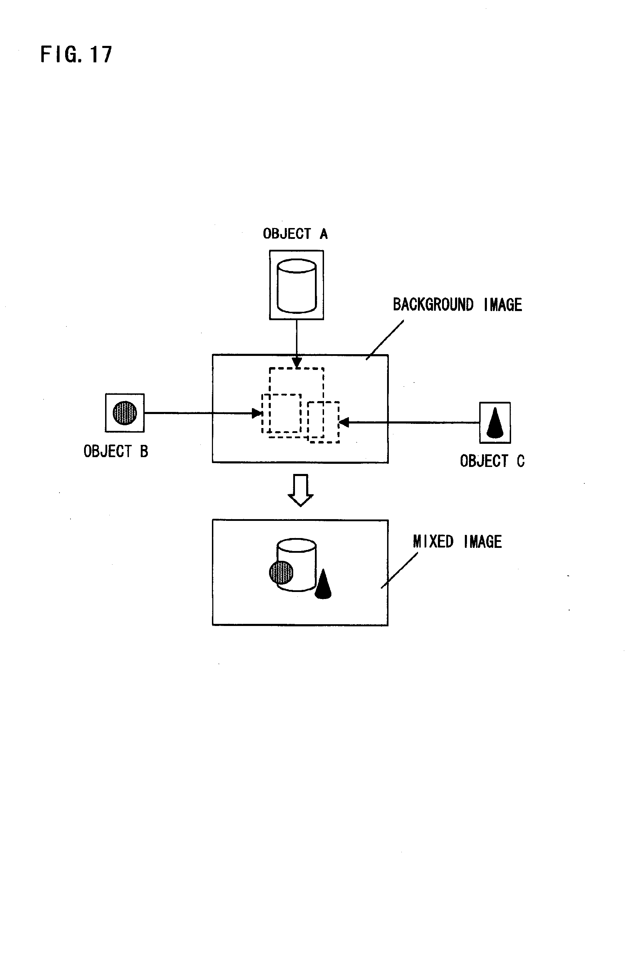

First, a method of defining the object by the MPEG data and a method of mixing the images is described with reference to Fig. 17. In addition, Fig. 17 shows a process when three objects A to C are mixed.

As shown in Fig. 17, a region which is a little larger than the object (hereinafter referred to as an "object region") is set for each of the objects A to C. The object region except for the object is normally transparent. That is, control information for making the object region except for the object transparent is added to each object.

With this control information, size information of the object region, outline information of the object, compressed image information of the object and attribute information (transparent, for example) of the region outside the object outline are added to each object. Furthermore, information regarding arrangement position of the object region on the screen and information regarding an anteroposterior order of the object are added thereto.

The above information is contained in the MPEG data of each object. In addition, since data structure (format) of the above information and the information other than the above information are shown in MPEG standard, a description thereof is not given here.

The decode process unit 221 decodes the image data for the L view point and the R view point which were read out from the memory unit 224 and obtains background image data and object image data for each view point and expands the data on the expansion memory 210. At the same time, the decode process unit 221 extracts the outline information, the attribute information, the arrangement information, the anteroposterior order information and the like and sends the information to the transition effect control unit 222 and the mixed image generation unit 223.

At the time of normal reproduction process, the mixed image generation unit 223 composes the background image and the object of each view point based on the outline information, the attribute information, the arrangement information, and the anteroposterior order information from the decode process unit 221 (refer to Fig. 17) and generates left-eye image data (image data for left eye) and right-eye image data (image data for right eye). Then, similar to the embodiment 1, the image data for left eye and the image data for right eye are mapped on the graphic memory 211 so that the left-eye image (L image) and the right-eye image (R image) may be arranged on the screen as shown in Fig. 12, for example.

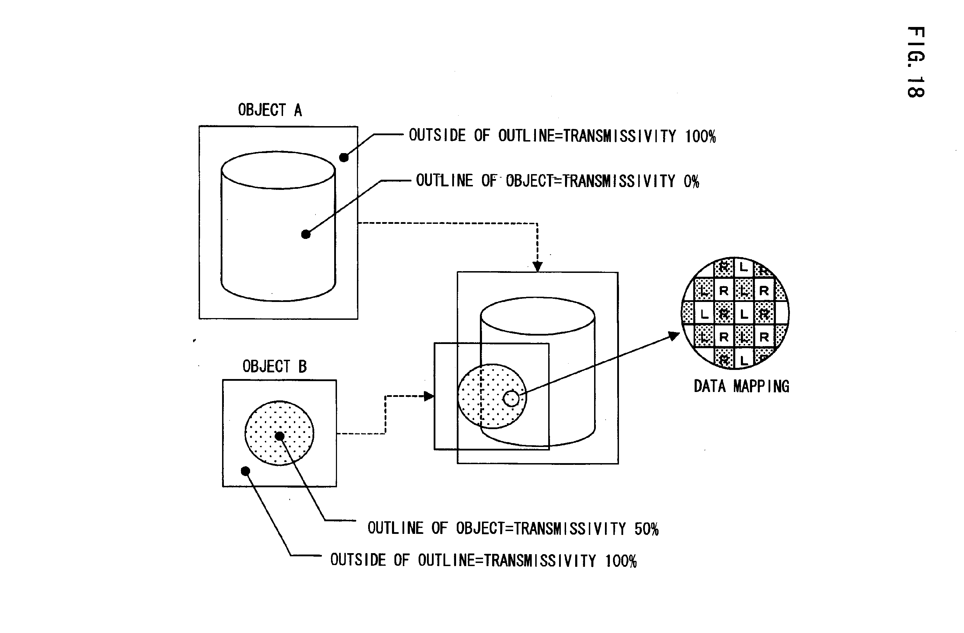

At the time of the fade-in operation or the fade-out operation, the mixed image generation unit 223 performs a process for expressing in a transparent manner the object to be faded in or faded out which is instructed from the transition effect control unit 222, generates the image data for left eye and the image data for right eye, and maps the data on the graphic memory 211. Fig. 18 shows mapping processes of the L image data and the R image data. In addition, in Fig. 18, a case where object B is made transparent (transmissivity is set at 50%) is illustrated.

As shown in Fig. 18, an overlapping part of the outline of the object A and that of the object B is detected based on the outline information, the arrangement information and the information regarding anteroposterior order of the objects A and B extracted by the decode process unit 221. In addition, the object B is positioned forward in Fig. 18. As described above, since the region outside the outline of the object B is set so as to be transparent, in the region outside the outline in the object region of the object B, the image data of the object A which is positioned behind is given a priority and mapped on the graphic memory 211. If the outline of the object B is not arranged in the region outside the outline, the image data of the background image is mapped on the graphic memory 211.

In the overlapping part of the outline of the object A and that of the object B, the image data of the object B is given a priority and mapped on the graphic memory 211 at a rate of every other pixel. The image data of the object A positioned behind is mapped on the remaining pixels.

In addition, the pixels to which the image data of the object B is allotted are set depending on the transmissivity of the object B. For example, when the transmissivity of the object B is changed from 50% to 80%, the pixels to which the image data of the object B is allotted are changed to a rate of every fifth pixel.

Next, the following describes an operation of the image display apparatus. First, a normal reproducing operation will be described.

When a command for reproducing an image of a certain file is input to the image display apparatus, the first still image data (MPEG data for the L view point and the R view point) in the still image data which constitutes the file is read out and decoded by the decode process unit 211. The image data for the L view point and the R view point obtained by the decoding (the background image and the object) are expanded in the expansion memory 210. In addition, the outline information, the attribute information, the arrangement information, the anteroposterior order information of each object which extracted at the time of decoding process are sent to the transition effect control unit 222 and mixed image generation unit 223.

Then, the mixed image generation unit 223 composes the background image data and the object image data for the L view point and the R view point based on the outline information, the attribute information, the arrangement information, the anteroposterior order information and generates the image data for left eye and the image data for right eye. Then, the generated the image data for left eye and the image data for right eye are mapped on the graphic memory 211.

Thus, the image data mapped on the graphic memory 211 is sent to the display 208 by the display control unit 207 and displayed on the display screen.

Then, when a command for sending the still image is input from the input device 201, the next still image data (MPEG data) which constitutes the file is decoded and the same process as the above is executed. Similarly, the next still image data is decoded every time the sending command is input and the above process is performed. Thus, the still image constituting the file is sequentially displayed.

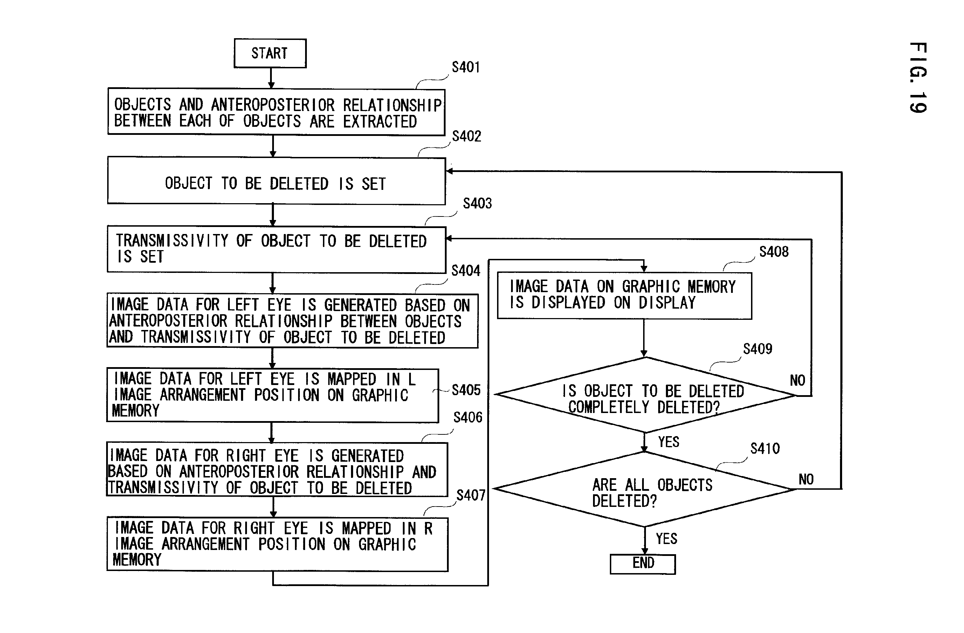

Next, the fade-out operation will be described. Fig. 19 shows a process flow at the time of the fade-out process. When a fade-out command is input, the transition effect control unit 222 extracts objects existing on the screen and an anteroposterior relation of the objects based on extraction information received from the decode process unit 221 (S401). Then, the hithermost object is set as an object to be deleted (S402). In addition, an object other than the hithermost object can be set as an object to be deleted.

Then, the transition effect control unit 222 sets a transmissivity of the object to be deleted (S403) and sends this transmissivity and identification information of the object to be deleted to the mixed image generation unit 223. Then, the mixed image generation unit 223 generates the image data for left eye based on the transmissivity and the identification information of the object to be deleted as described above (S404). Then, the generated the image data for left eye is mapped on an L image data region on the graphic memory 211 (S405). Similarly, the image data for right eye is generated (S406) and this is mapped on the R image data region of the graphic memory 211 (S407).

Thus, when the mapping processes on the graphic memory 211 are completed, the image data on the graphic memory 211 is transferred to the display 208 and thus, the mixed image in which the L view point image and the R view point image are mixed is displayed and displayed on the display 208 (S408). Then, it is determined whether or not the object to be deleted is completely deleted (transmissivity is 100%) and when the object is not completely deleted, the operation returns to S403 and the transmissivity is increased one step and the above process is repeated.

The processes of S403 to S408 are repeated until the object to be deleted is completely deleted (S409). Then, when the object to be deleted is completely deleted, it is determined whether or not all of the objects on the screen are completely deleted (S410) and when it is NO, the operation returns to S402 and a new object is set as the object to be deleted. The object to be deleted is an object which is positioned hithermost among the remaining objects on the screen. Then, when all of the objects on the screen are completely deleted, the fade-out process is completed (S410).

Next, the following describes an operation at the time of the fade-in process. This fade-in process is executed by performing procedures opposite to those in the fade-out process.

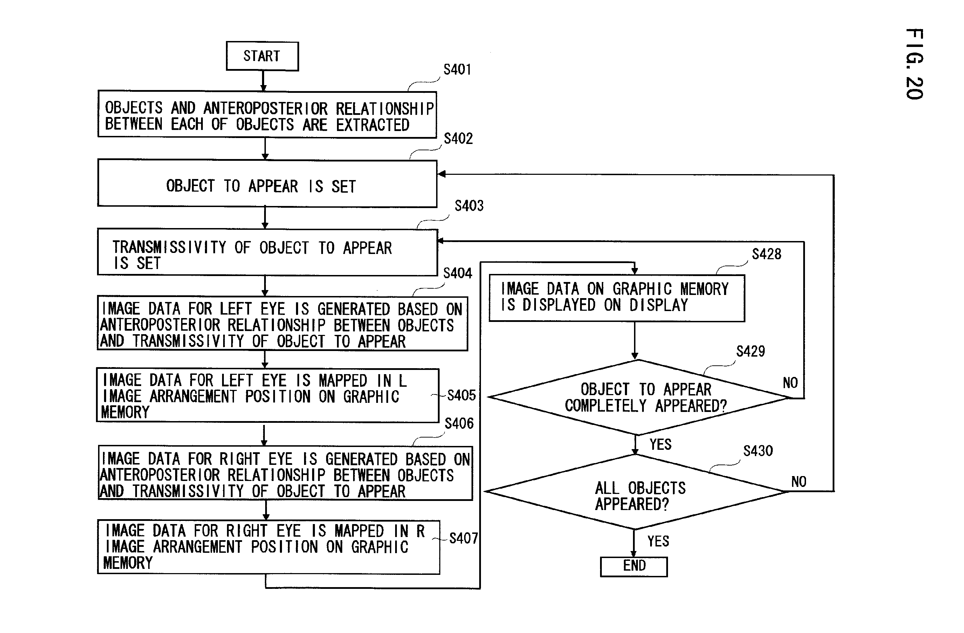

Fig. 20 shows a process flow of the fade-in process. When a fade-in command is input, the transition effect control unit 222 extracts objects to be drawn on the screen and an anteroposterior relation of each of the objects based on extraction information received from the decode process unit 221 (S421). Then, the innermost object is set as an object to appear (S422). In addition, an object other than the innermost object can be set as an object to appear.

Then, the transition effect control unit 222 sets a transmissivity of the object to appear (S423) and sends this transmissivity and identification information of the object to appear to the mixed image generation unit 223. Then, the mixed image generation unit 223 generates the image data for left eye based on the transmissivity and the identification information of the object to appear as described above (S424). At this time, the object which has not appeared yet is made full-transparent. Then, the generated image data for left eye is mapped on an L image data region on the graphic memory 211 (S425). Similarly, the image data for right eye is generated (S426) and this is mapped on the R image data region of the graphic memory 211 (S427).

Thus, when the mapping processes on the graphic memory 211 are completed, the image data on the graphic memory 211 is transferred to the display 208 and thus, the mixed image in which the L view point image and the R view point image are mixed is displayed and displayed on the display 208 (S428). Then, it is determined whether or not the object to appear has completely appeared (transmissivity is 0%) and when it has not completely appeared, the operation returns to S423 and the transmissivity is decreased one step and the above process is repeated.

The processes of S423 to S428 are repeated until the object to appear completely appeared (S429). Then, when the object to appear completely appeared, it is determined whether or not all of the objects have completely appeared on the screen (S430) and when it is NO, the operation returns to S422 and a new object is set as the object to appear. The object to appear is an object which is positioned innermost among the objects which are not displayed on the screen. Then, when all of the objects completely appeared on the screen, the fade-in process is completed (S430).

As described above, according to this embodiment, since the object in each state can be viewed stereoscopically while the object is sequentially deleted or allowed to appear, the fade-out and fade-in processes can be realistically implemented.

In addition, although the object is deleted or allowed to appear by taking out the displayed pixels in the above embodiment, a color of the object may be made darker or lighter according to transmissivity instead of the above or together with the above.

Incidentally, although the present invention is applied to the so-called two-eye type image display apparatus in the above embodiments, the present invention can be applied also to an image display apparatus having more image-taking view points. In such the case, according to the embodiment based on the configuration shown in Fig. 10, the number of view points are increased and the tracing process is performed, and according to the embodiment based on the configuration shown in Fig. 16, MPEG data corresponding to the number of view points is previously prepared for every still image and it is stored in the memory unit 224.

Furthermore, various kinds of modifications can be implemented. For example, although the fade-in and fade-out processes are performed for the still image file in the above embodiment, needless to say, the processes can be performed for a moving image file. In the case of the moving image file, the transmissivity of the object is gradually changed every frame and thus the object disappears from the screen or the object appears on the screen. This process is effective when it is used in a screen display on which images do not move so much. In addition, various kinds of modifications can be added to the embodiments of the present invention within the same or equivalent scope of the present invention.

In addition, the three-dimensional stereoscopic image display apparatus according to the above embodiment can be implemented by adding the functions of configuration examples detailed in each embodiment to a personal computer and the like. In this case, a program for implementing the functions of each configuration example is obtained by mounting a disk or downloaded to the personal computer via the Internet. The present invention can be appreciated as the program for adding such the functions to computers.

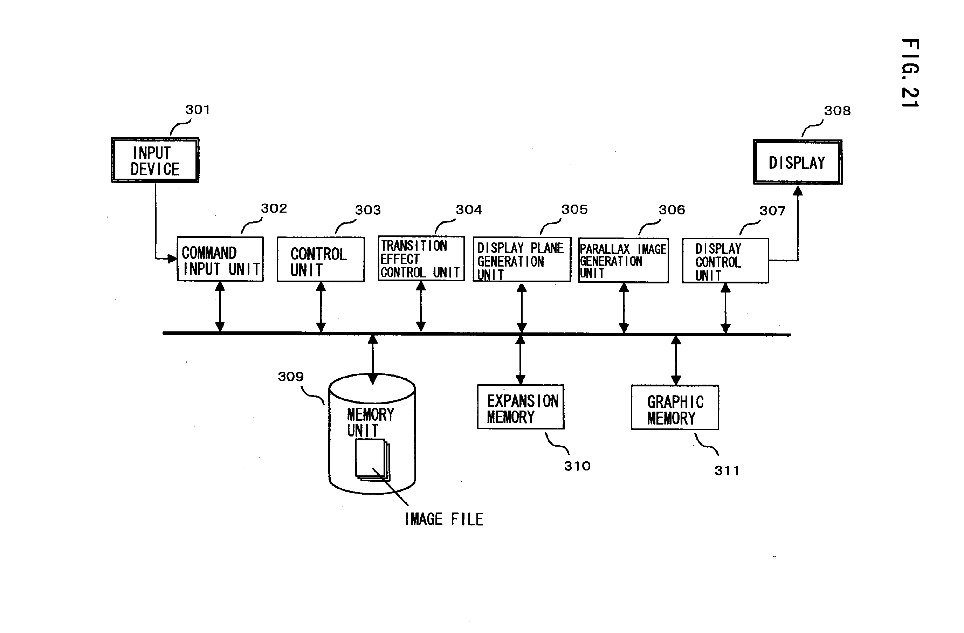

Hereinafter, another embodiment of the present invention will be described with reference to the drawings. At first, Fig. 21 shows a configuration of an image display apparatus according to this embodiment of the present invention. In addition, according to this embodiment, the prime image data is two-dimensional image data, and three-dimensional image data is generated from this two-dimensional image data.

As shown in Fig. 21, the image display apparatus includes an input device 301, a command input unit 302, a control unit 303, a transition effect control unit 304, a display plane generation unit 305, a parallax image generation unit 306, a display control unit 307, a display 308, a memory unit 309, an expansion memory 310, and a graphic memory 311.

The input device 301 includes input means such as a mouse, a keyboard or the like, which is used when a reproduced image is organized or edited or a command such as a reproduction command, an image sending command, a fade-in and fade-out commands, or the like is input. The command input unit 302 sends various kinds of commands input from the input device 301 to the control unit 303. The control unit 303 controls each unit according to the input command transferred from the command input unit 302.

The transition effect control unit 304 executes and controls a display plane rotation process in response to the fade-in or fade-out command input from the input device 301.

The display plane generation unit 305 finds geometric figures of display planes when viewed from a left view point and a right view point according to a rotation angle input from the transition effect control unit 304. In addition, a process in the display plane generation unit 305 will be described later.

The parallax image generation unit 306 generates left-eye image data and right-eye image data from the two-dimensional image data expanded in the expansion memory 310, and maps the image data on the graphic memory 311. Furthermore, when a transition effect command is input from the transition effect control unit 304, the parallax image generation unit 306 compresses the left-eye image data and the right-eye image data (either non-linearly or linearly) so that the left-eye image and the right-eye image can be contained in a left-eye geometric figure and a right-eye geometric figure which are provided from the display plane generation unit 305 and maps the compressed both image data on the graphic memory 311. In addition, such the transition effect process will be described later.

The display control unit 307 sends image data stored in the graphic memory 311 to the display 308 according to a command from the control unit 303. The display 308 displays the image data received from the display control unit 307 on the display screen.

The memory unit 309 is a database to store a plurality of image files, and image data including a predetermined number of still images is stored in each image file. Here, each still image data is a data for displaying the two-dimensional image in this embodiment.

The expansion memory 310 is a RAM (Random Access Memory) and it is used when the still image data which was read out from the memory unit 309 is temporarily stored. The graphic memory 311 comprises a RAM and sequentially stores image data for three-dimensional stereoscopic display generated by the parallax image generation unit 306.

Next, the following describes an operation of the image display apparatus. First, a normal reproducing operation is described.

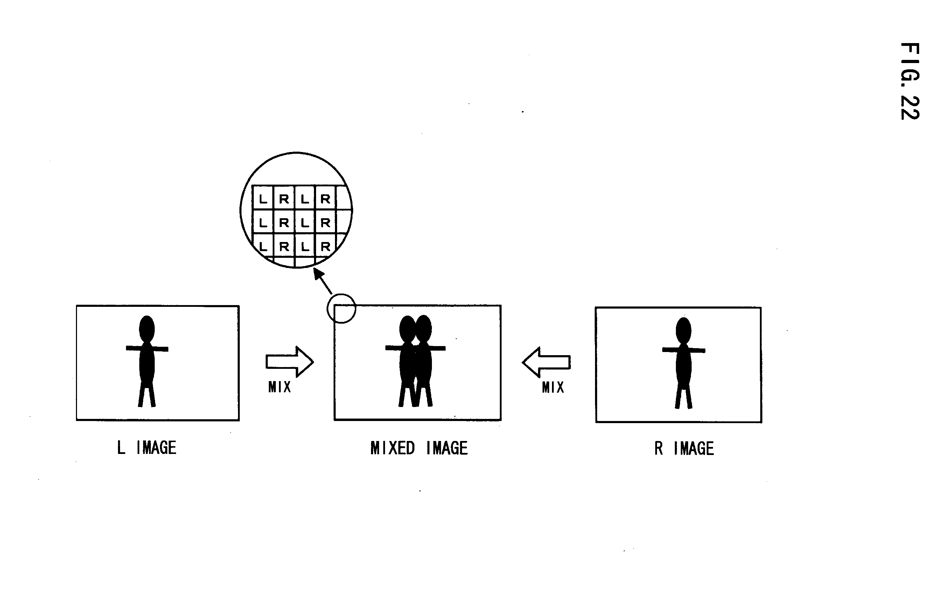

When an image reproducing command for a certain file is input to the image display unit, the first still image data of the still image data which constitutes the file is read out and expanded on the expansion memory 310. Then, the parallax image generation unit 306 generates right-eye image data and left-eye image data from the read-out image data and maps them on the graphic memory 311 so that a right eye image (R image) and a left eye image (L image) are arranged on the screen as shown in Fig. 22, for example.

In addition, in Fig. 22, "R" designates a display region (pixel) for the right eye image on the screen, and "L" designates a display region (pixel) for left eye image on the screen. Allotment of such the display regions is determined according to a configuration of a three-dimensional filter. That is, the display regions (pixels) of the right eye image and the left eye image are allotted so that the right-eye image is projected to a right eye of a viewer and the left-eye image is projected to a left eye of the viewer when the displayed image is viewed through the three-dimensional filter.

Thus, the image data mapped on the graphic memory 311 is sent to the display 308 by the display control unit 307 and displayed on the display screen.

Then, when a sending command of the still image is input from the input device 301, the next still image which constitutes the file is expanded on the expansion memory 310 and the same process as the above is executed. Similar to the above, every time the sending command is input, the next still image data is expanded on the expansion memory 310 and the above process is executed. Thus, the still image constituting the file is sequentially displayed on the display 308.

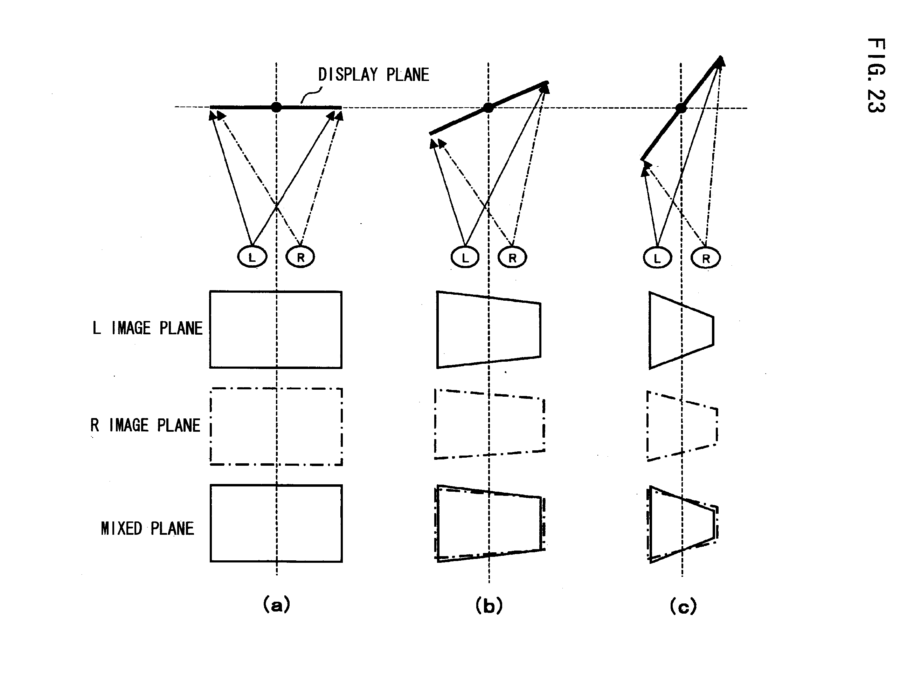

Next, the following describes operations at the time of the fade-in and fade-out processes. First, a process for forming the geometric figure which is executed by the display plane generation unit 305 at the time of fading in or fading out process is described with reference to Fig. 23.

As shown in a portion (a) in Fig. 23, according to the geometric figure generating process, a left-eye view point L and a right-eye view point R are assumed on the side of a front face of the display screen and at a predetermined distance from the display screen and as shown in Figs. 23B and 23C, from this state, the display screen is sequentially rotated by an angle of $\alpha$ degrees to calculate the geometric figure of the display plane when viewed from each of the left-eye view point and the right-eye view point in each rotating state.

An L image plane and an R image plane in Fig. 23 show schematic configurations of shapes of geometric figures when the viewer sees the display plane from the L-eye view point L and the right-eye view point R. As shown in Fig. 23, the L image plane and the R image plane are different in shape because of the parallax of the left-eye view point L and the right-eye view point R. Therefore, when the L image and the R image are applied to the L image plane and the R image plane, respectively, the parallax is generated in an image projected to the left eye and an image projected to the right eye, so that the image in the rotating state can be stereoscopically viewed.

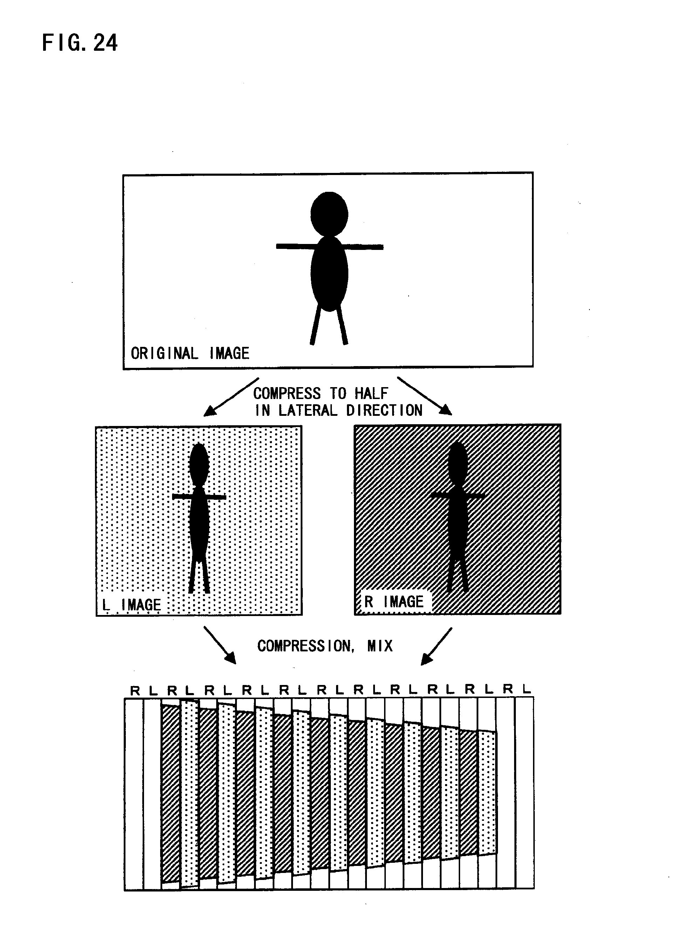

Next, a process of mixing parallax images which is executed by the parallax image generation unit 306 at the time of the fade-in and fade-out processes is described with reference to Fig. 24.

According to such the process of mixing the parallax images, first, image data for left eye and image data for right eye are generated by compressing original image data (two-dimensional image data) to half in a lateral direction, and this is expanded on the expansion memory 310. Then, the image data for left eye and the image data for right eye are compressed (or extended) in the vertical direction and the lateral direction so that the images of the generated the image data for left eye and t image data for right eye can be fitted in the L image plane and the R image plane which were generated by the display plane generation unit 305. Then, the compressed image data for left eye and the image data for right eye are mapped on corresponding region of image data for left eye and region of the image data for right eye on the graphic memory 311.

A state in which the original image data (shown on an upper part in Fig. 24) is compressed to half in the lateral direction is schematically shown in a middle part in Fig. 24, and a state in which the generated image data for left eye and image data for right eye in the above-described way are mapped on the graphic memory 311 so that they can be contained in the L image plane and the R image plane, respectively is schematically shown in a lower part in Fig. 24.

As shown in the lower part in Fig. 24, the L image plane and the R image plane are so set as to become maximum on the display plane. That is, a maximum vertical length of lines constituting the image (fourth line from left in Fig. 24) coincides with a vertical length of the image display region. In addition, since the vertical length of a part which protrudes from the screen is not longer than the vertical length of the image display region in fact, it is cut to be displayed in some cases. However, display magnification ratios of the L image plane and the R image plane to their original sizes (sizes of the L image plane and the R image plane calculated according to Fig. 23) are the same. That is, when the L image plane and the R image plane shown in Fig. 24 are generated, a relation of the sizes between the L image plane and the R image plane is maintained. In other words, it is not that the line having the maximum vertical length in each of the L image plane and the R image plane is to be conformed to the vertical length of the image display region, but that the line having the maximum vertical length in total is to be conformed to the vertical length of the image display region. In addition, the L image plane and the R image plane are set so that centers (rotation axes) in the vertical and lateral directions coincide with each other.

In addition, background image data (single-colored data, for example) is mapped on a data-vacant portion generated on the graphic memory 311 when the compressed image data for left eye and image data for right eye are mapped on the graphic memory 311.

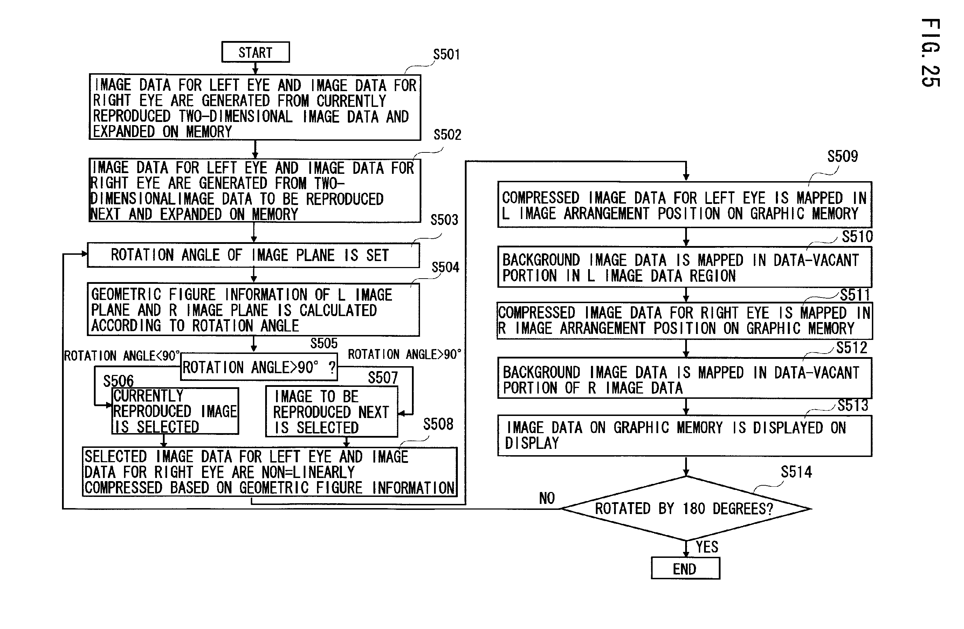

Fig. 25 shows a process flow when the fade-in and fade-out commands are input. When the fade-in and fade-out commands are input, the two-dimensional still image data to be currently reproduced is compressed to half in the lateral direction and image data for left eye and image data for right eye are generated and expanded on the expansion memory 310 (S501). Moreover, the two-dimensional image data of a still image to be reproduced next is read out from the memory unit 309, and compressed to half in the lateral direction and image data for left eye and image data for right eye are generated and expanded on the expansion memory 310 (S502).

Then, a rotation angle of the display plane is input from the transition effect control unit 304 to the display plane generation unit 305 (S503) and an L image plane and an R image plane (geometric figure information) are calculated according to the rotation angle by the display plane generation unit 305 (S504). In addition, the rotation angle of the display plane is set a unit rotation angle $\alpha$ in the first process cycle and then it is increased by a rotation angle $\alpha$ every process cycle. At this time, in a case a fade-in and fade-out speed can be appropriately set, the unit rotation angle $\alpha$ corresponds to this speed. In addition, the rotation angle may be changed every process cycle. In this case, the display effect at the time of fading in and out can be further improved.

Thus, when the L image plane and the R image plane are set, it is determined whether or not the rotation angle exceeds 90° (S505). Here, when the rotation angle is less than 90°, since the display plane is not completely turned, the currently reproduced image data for left eye and image data for right eye are set as an image to be displayed on the L image plane and the R image plane (S506). Meanwhile, when the rotation angle is more than 90°, since the display plane is completely turned, the L image data and the R image data which are to be reproduced next are set as an image to be displayed on the L image plane and the R image plane (S507). In addition, when the rotation angle is 90°, no image is set. At this time, it is assumed that both the L image plane and the R image plane do not exist.

When the image data to be displayed is selected as described above, the selected image data for left eye and image data for right eye are non-linearly compressed, for example so as to be fitted in the L image plane and the R image plane, respectively (S508). Then, the compressed L image data is mapped on the L image data region on the graphic memory 311 (S509) and the background image data (single colored, for example) is mapped in the data-remaining portion after the mapping in L data region (S510). Similarly, the compressed R image data is mapped in the data-remaining portion after the mapping on the graphic memory 311 (S511) and the background image data is mapped in the remaining R data region (S512).

Thus, when the mapping processes on the graphic memory 311 are completed, the image data on the graphic memory 311 is transferred to the display 308. Thus, the image in which the right-eye image and left-eye image are drawn in the display plane which has been virtually rotated by a predetermined degree and the background image is drawn in the data-vacant portion other than the above display plane is displayed on the display 308 (S513).

The processes of S503 to 513 are repeatedly executed until the display screen is virtually rotated by 180°, that is, until images displayed in the display screen are turning over, front-side back (S507). At this time, the still image is replaced with the next still image and the fade-in and fade-out operations are completed.

As described above, according to the present invention, since the image on the rotating display plane can be stereoscopically viewed while the display plane is virtually rotated (quasi-turned), the fade-in and fade-out operations can be performed realistically.

In addition, although the display plane is quasi-turned in the lateral direction in the above embodiment, the display plane can be rotated in various directions such as a vertical direction, etc., a horizontal direction or their combined direction. In this case, the display plane generation unit 305 performs an arithmetic calculation process on the display plane in each rotating state according to an arithmetic calculation process principle shown in Fig. 23 and calculates an L image plane and an R image plane in each rotating state.

Furthermore, although the L image plane and the R image plane are calculated by the display plane generation unit 305 in the above embodiment, when the rotation direction and the rotation angle are fixed, the L image plane and the R image plane corresponding to the rotation angle may be previously calculated and stored, and the L image plane and the R image plane corresponding to each rotation angle of the concerned process cycle may be read out at the time of the fade-in and fade-out processes to be used.

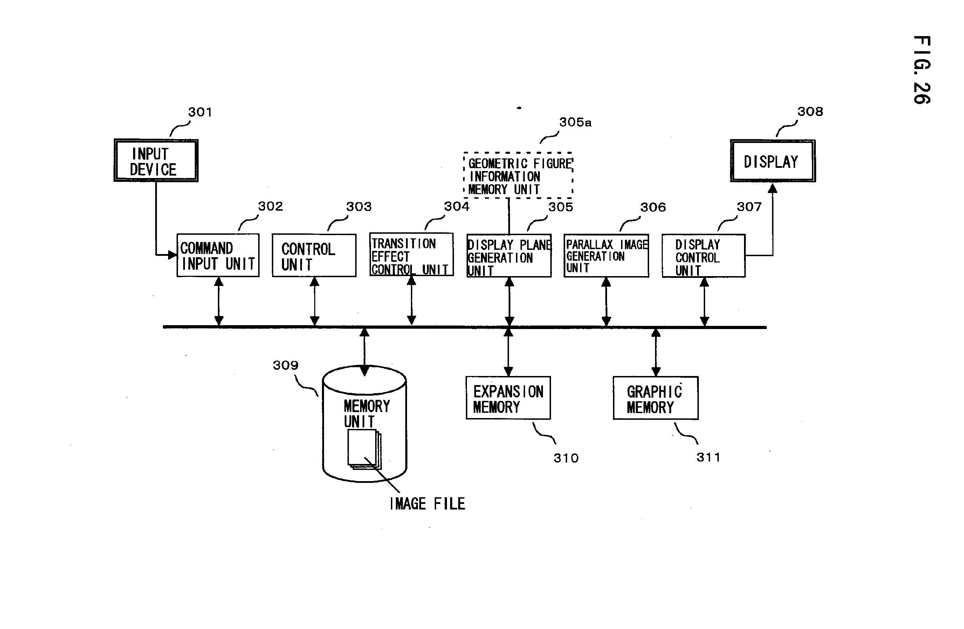

Fig. 26 shows a configuration example of an image display apparatus in such the case. According to this configuration example, a geometric plane information memory unit 305a in which the L image plane and the R image plane corresponding to the rotation angle are stored is provided. In addition, the display plane generation unit 305 reads out, from the geometric plane information memory unit 305a, the L image plane and the R image plane corresponding to the rotation angle input from the transition effect control unit 304, and sends them to the parallax image generation unit 306.

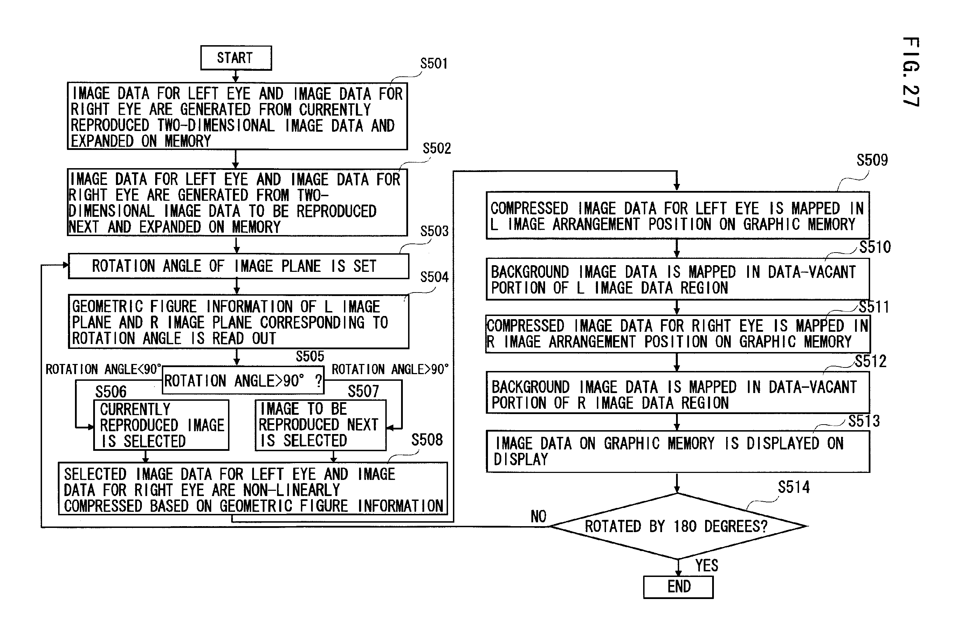

Fig. 27 shows the fade-in and the fade-out process flow in this case. In this process flow, S504 in the process flow in Fig. 25 is replaced with S520. Other processes are the same as those in the process flow in Fig. 25.

Incidentally, although the still image data stored in the memory unit 309 is a two-dimensional data in the above embodiment, a three-dimensional still image data (left-eye image data and right-eye image data) may be stored in the memory unit 309 instead. In this case, in the configuration shown in Fig. 21, the L image data and R image data corresponding to the still image to be reproduced are read out from the memory unit 309 and expanded on the expansion memory 310. According to the configuration in this case, the function of the parallax image generation unit 310 is different from that in the above configuration. That is, in this configuration, since the L image data and the R image data expanded on the expansion memory 310 are mapped on the corresponding regions on the graphic memory 311 as they are at the time of the normal reproducing operation, the process for generating the L image data and the R image data from the two-dimensional image data, which is executed by the parallax image generation unit 306 at the time of the normal reproducing operation in the above embodiment is not performed.

In addition, when the fade-in and fade-out operations are executed in the configuration using the above three-dimensional still image data, the L image data and the R image data expanded on the expansion memory 310 may be non-linearly compressed, for example so that they are fitted as they are in the L image plane and the R image plane and mapped on the graphic memory 311. However, since the L image data and the R image data originally have a parallax corresponding to the display for the stereoscopic image, when they are applied to the L image plane and the R image plane as they are, the reproduced image is affected by the original parallax, so that the stereoscopic vision is deformed.

This deformation can be prevented by providing a function to eliminate the original parallax for the parallax image generation unit 306. More specifically, two-dimensional image data is generated from the L image data and the R image data expanded on the expansion memory 310 once and the two-dimensional image data is processed in the same manner as in the above embodiment to reconstitute the image data for left eye and the image data for right eye.

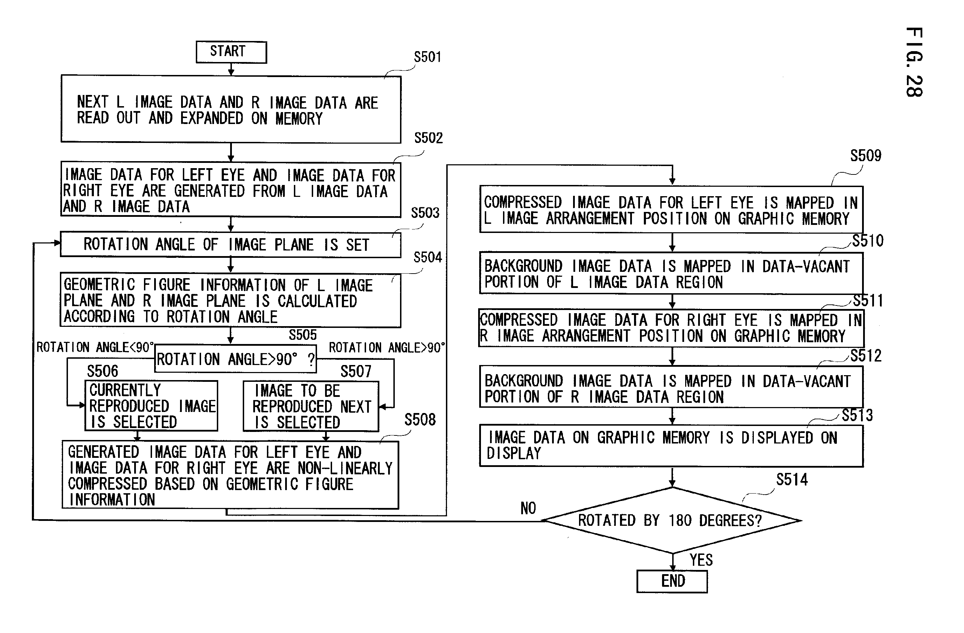

Fig. 28 shows a process flow of the fade-in and fade-out processes in this case. According to this process flow, S501 and S502 in the process flow in Fig. 25 are replaced with S530 and S531.

That is, although the L image data and the R image data are generated from the two-dimensional image data and expanded on the expansion memory 310 at S501 and S502 in the process flow in Fig. 25, according to the process flow in Fig. 28, L image data and R image data of the next stereoscopic still image are expanded on the expansion memory 310 at S530 (the currently reproduced the image data for left eye and the image data for right eye are already expanded on the expansion memory 310 at the time of the normal reproducing operation). Then, the currently reproduced the image data for left eye and the image data for right eye for the still image and the image data for left eye and the image data for right eye to be reproduced next are reconstituted from the currently reproduced L image data and the R image data and the L image data and the R image data to be reproduced next at S531. Other processes are the same as the process flow in Fig. 25.

As described above, according to the reconstituting process at S531, it is possible to adopt a method in which the two-dimensional image data is generated from the image data for left eye and the image data for right eye once and then the L image data and the R image data are reconstituted by processing the two-dimensional image data in the same manner as in the above embodiment. However, in a case where the above method is executed by a series of computation, the process for generating the two-dimensional image data may be omitted and the image data for left eye and the image data for right eye may be reconstituted directly from the L image data and the R image data.

According to the process flow in Fig. 28, since the parallax on the stereoscopic vision originally contained in the L image data and the R image data can be eliminated, similar to the above embodiment, the fade-in and fade-out operations can be realistically implemented.

Although the present invention is applied to the so-called two eye-type image display apparatus in the above embodiment, the present invention can be applied to an image display apparatus having more than two image-taking view points.

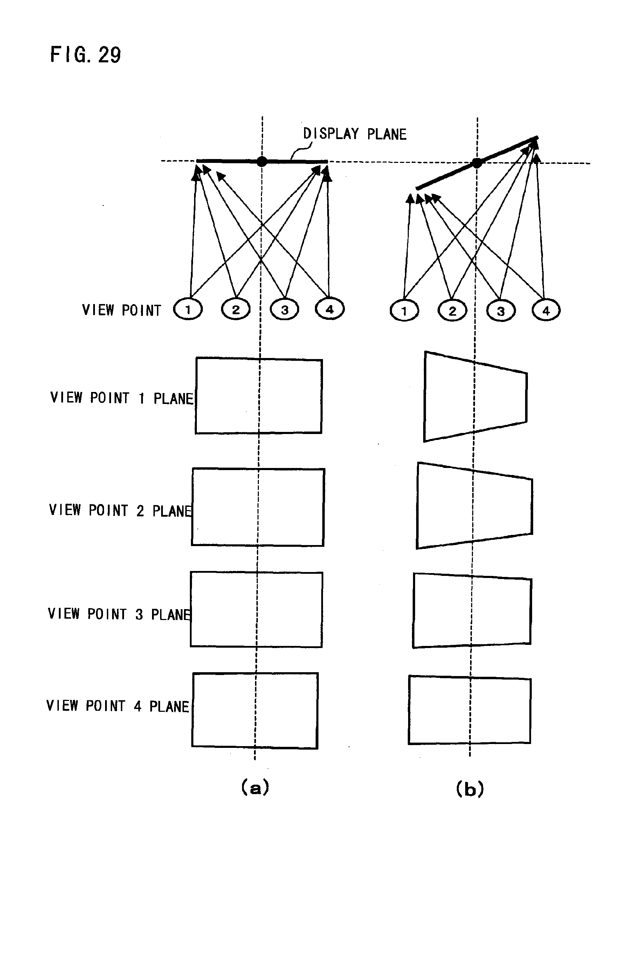

That is, although the two geometric figures viewed from the L view point and the R view point are generated in the embodiment shown in Fig. 23, when there are two or more view points, each view point is assumed on the side of a front face of the display screen, and then a geometric figure viewed from each view point is calculated and image data of each view point may be non-linearly compressed so as to be fitted in the corresponding geometric figure and mapped on the expansion memory like the embodiment shown in Fig. 23. Fig. 29 shows examples of geometric figures when the present invention is applied to a four-eye type image display apparatus. A portion (a) in Fig.29 shows the geometric figure as an example when the display plane is viewed from each view point before rotation, and a portion (b) in Fig. 29 shows the geometric figure as an example when the display plane is viewed from each view point after the rotation by a predetermined amount.

Moreover, other various kinds of modifications can be made. For example, although the background image comprises the single color in the above embodiment, needless to say, another background image can be provided. In addition, although the L image data region and the R image data region on the graphic memory 311 are allotted so that the L image plane and the R image plane become maximum on the display plane in the above embodiment, a method of allotting the L image data region and the R image data region on the graphic memory 311 is not limited to the above. For example, the L image data region and the R image data region on the graphic memory 311 may be allotted so that the L image plane and the R image plane are gradually reduced on the display screen until the rotation angle reaches 90° (until the images become front-side back) and the L image plane and the R image plane are gradually increased on the display screen until the rotation angle reaches 180° from 90°.

In addition, although the present invention is applied to a display technique at the time of fade-in and fade-out processes in the above embodiment, the present invention can be applied to a display technique other than the fade-in and fade-out processes. For example, the present invention can also be applied to a case a special effect is applied to the image display by quasi-turning the display plane in a three-dimensional space or by quasi-fixing the display plane obliquely in the three-dimensional space.

Other various kinds of modifications can be added to the embodiment of the present invention within the same or equivalent scope of the present invention. In addition, the three-dimensional stereoscopic image display apparatus according to the above embodiment can be implemented by adding the function of the configuration example described in each embodiment to a personal computer and the like. In this case, a program for implementing the functions of each configuration example shown in the above embodiments is obtained by mounting a disk or downloaded to the personal computer or via the Internet. The present invention can be generally implemented as the program for adding such functions to computers.

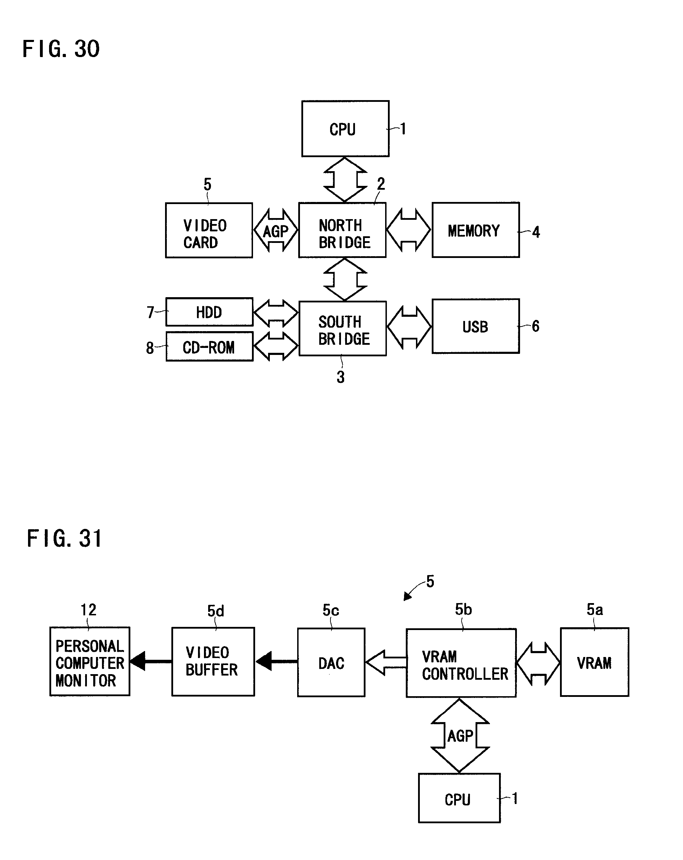

Hereinafter, an image display apparatus according to yet another embodiment is described with reference to Figs. 30 to 33.

Fig. 30 shows an example of an architecture of a personal computer (image display apparatus). A CPU 1 is connected to a north bridge 2 having a system control function and a south bridge 3 having an interface function such as a PCI bus or an ISA bus. A video card 5 is connected to the north bridge 2 through a memory 4 or an AGP (Accelerated Graphics Port). A USB (Universal Serial Bus) interface 6, a hard disk drive (HDD) 7, a CD-ROM device 8 and the like are connected to the south bridge 3.

Fig. 31 shows a common example of the video card 5. A VRAM (video memory) controller 5b controls writing to and reading from drawing data to the VRAM 5a through the AGP by a command from the CPU 1. A DAC (D/A converter) 5c converts digital image data from the VRAM controller 5b to analog video signals and supplies the video signals to a personal computer monitor 12 through a video buffer 5d. In this image display process (rendering), stereoscopic image display process in which a right-eye image and a left-eye image are generated and drawn alternately in a vertical stripe shape can be performed.

In general, a personal computer is provided with Internet connection environment and can receive a file (such as a document file, mail, an HTML file, an XML file, and the like) from a transmission-side device such as a server on the Internet, or the like. Furthermore, when the personal computer is connected to the monitor 12 provided with a liquid crystal burrier, for example, both planar image and stereoscopic image can be displayed. In the case of the stereoscopic image in which the right-eye image and the left-eye image are alternately arranged in the shape of vertical stripe, a vertical stripe-shaped light shielding region is formed in the liquid crystal barrier by the control of the CPU 1. In addition, when the stereoscopic image is displayed in a part (a window for a file reproduction, or an image part in the HTML file) on the screen, a size and a position of the vertical stripe-shaped light shielding region can be controlled by the CPU 1 based on a display coordinate and a size of the window or the image part. Instead of the liquid crystal barrier, a normal barrier (barrier stripes are formed fixedly at a predetermined pitch) may be used. In addition, a word processor and/or browser software (viewer) is generally installed on the personal computer, and it is possible to display the image on the monitor 12 when the file is opened.

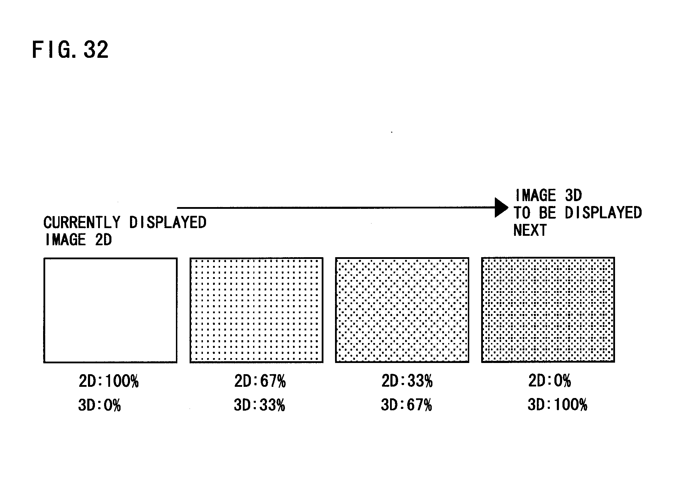

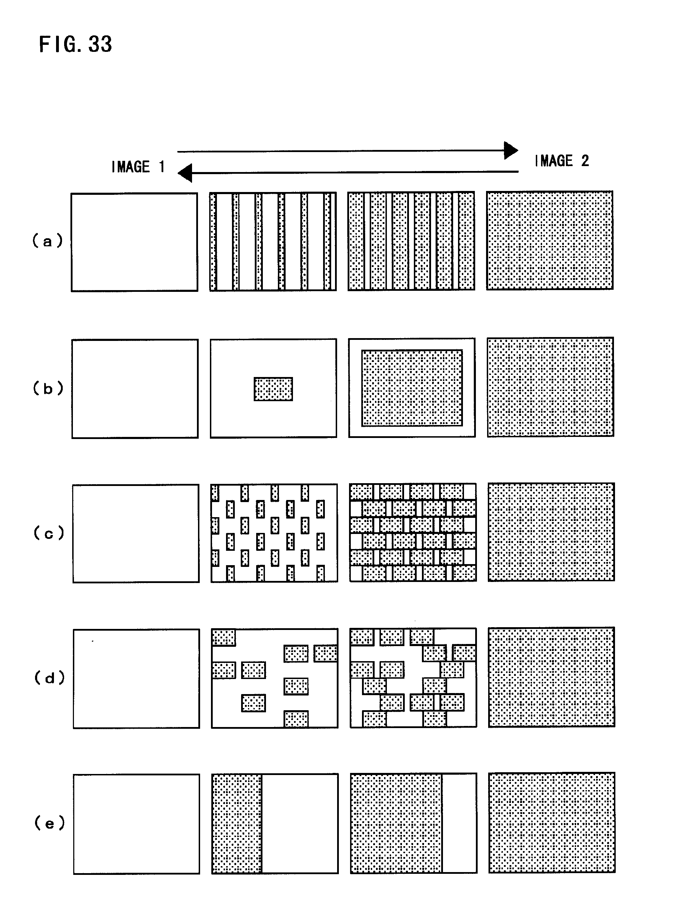

Next, a description is given about a process when a stereoscopic image is switched to another stereoscopic image, the stereoscopic image is switched to the planar image, or the planar image is switched to the stereoscopic image by the personal computer (viewer) with reference to Figs. 32 and 33. In addition, these image switching operations are needed when a slide show of the image files is done, for example. Another embodiments described above can be also used for the slide show.

The personal computer is provided with a program in which mixed image data is generated by mixing a pixel value of currently displayed image data and a pixel value of image data to be displayed next by a designated ratio, and the above ratio is designated so that the ratio of the pixel value of the currently displayed image data is gradually reduced to be finally 0% with a predetermined time period when the stereoscopic image is switched to another stereoscopic image, the stereoscopic image is switched to the planar image, or the planar image is switched to the stereoscopic image, and the CPU 1 performs the processes according to the program.

In generation of the mixed image data, when it is assumed that a R (red) pixel value of the currently displayed image data is R1 and a R pixel value of the next display image data is R2 and a ratio of R1 is M%, the CPU 1 generates the mixed R pixel value by an equation R = (R1 x M/100 + R2 x (1 - M/100)). The VRAM controller 5b performs controls for writing the mixed R pixel value and the like (drawing data) to the VRAM 5a or reading the value and the like from the VRAM 5a for display by a command from the CPU 1. Although the mixed R pixel value and the like may be sequentially written to the VRAM 5a from a region corresponding to an upper horizontal line on the screen to a region corresponding to a lower horizontal line, the present invention is not limited to this.

At the beginning of the image switching, processes are repeated according to a following manner: the CPU 1 sets the M at 95%, for example, to perform the above-described calculation based on the program and after 0.1 seconds, sets the M at 90% which is reduced by 5% to perform the calculation, and after another 0.1 seconds, sets the M at 85% which is reduced by 5% to perform the calculation, and so on. In this case, the next display image can be completely displayed on the monitor after 1.9 seconds. Fig. 32 schematically shows an image switching phase taking an example of switching from the planar image (2D) to the stereoscopic image (3D). According to the above process, it seems that the currently displayed image is gradually seen through (becomes transparent) and the next image comes to be displayed.

In addition, in a case where the pixel value of the currently displayed image data is changed to the pixel value of the next display image data every pixel and this change pixel is selected at random or every predetermined number of pixels also, it seems that the currently displayed image is gradually seen through (becomes transparent) and the next image comes to be displayed. In addition, in a case the change pixel is selected so that it is sequentially lowered from an upper horizontal line to a lower horizontal line, it seems that the next display image is displayed in a wiping manner. In this display switching, the CPU 1 may perform a drawing process in which the switching pixel is designated so that the pixel number ratio of the currently displayed image data is gradually reduced to be finally 0% for a predetermined time (3 seconds, for example).

In addition, as shown in Fig. 33, the CPU 1 may perform the drawing process in which the switching pixel is designated so that a width of a region or the number of regions in the form of a line or block on the screen may be increased.

According to a portion (a) in Fig.33, the pixel value of a corresponding address on the VRAM 5a is rewritten to the pixel value of the next display image in a plurality of regions which are vertical lines arranged on the screen at predetermined intervals. Then, the process for rewriting the pixel value of the corresponding address on the VRAM 5a to the pixel value of the next display image is performed so that a width of the vertical line may be increased in a lateral direction, and the region of the currently displayed image is gradually reduced to be finally 0% in a predetermined time.

According to a portion (b) in Fig. 33, the pixel value of a corresponding address on the VRAM 5a is rewritten to the pixel value of the next display image in a center region of the screen. Then, the process for rewriting the pixel value of the corresponding address on the VRAM 5a to the pixel value of the next display image is performed so that the above region may be increased in vertical and lateral directions, and the region of the currently displayed image is gradually reduced to be finally 0% in a predetermined time.

According to a portion (c) in Fig. 33, the pixel value of a corresponding address on the VRAM 5a is rewritten to the pixel value of the next display image in a plurality of regions having a predetermined vertical length and arranged in a staggered fashion on the screen. Then, the process for rewriting the pixel value of the corresponding address on the VRAM 5a to the pixel value of the next display image is performed so that each region may be increased in a lateral direction, and the region of the currently displayed image is gradually reduced to be finally 0% in a predetermined time.

According to a portion (d) in Fig.33, the pixel value of a corresponding address on the VRAM 5a is rewritten to the pixel value of the next display image in block-shaped regions arranged at random on the screen. Then, the process for rewriting the pixel value of the corresponding address on the VRAM 5a to the pixel value of the next display image is performed so that the above regions may be increased so as to be arranged at random, and the region of the currently displayed image is gradually reduced to 0% in a predetermined time.

According to a portion (e) in Fig. 33, the pixel value of a corresponding address on the VRAM 5a is rewritten to the pixel value of the next display image in a vertical line region at left end on the screen. Then, the process for rewriting the pixel value of the corresponding address on the VRAM 5a to the pixel value of the next display image is performed so that a width of the vertical line may be increased in a lateral direction on the right, and the region of the currently displayed image is gradually reduced to be finally 0% in a predetermined time.

Although the above embodiment illustrates an example in which the personal computer is utilized, the present invention is not limited to this and the image display apparatus may be a digital broadcasting receiver which receives data broadcasting (BML file) and displays an image, or a mobile phone provided with Internet connection environment and an image display function. Further, although the stereoscopic vision without using glasses is taken as an example in the above embodiment, the present invention is not limited to this. For example, right and left eye images which are displayed alternately in a liquid crystal shutter method may be mixed gradually with the next image as described above.

**BRIEF DESCRIPTION OF THE DRAWINGS**

Fig. 1 is a view showing a configuration of a three-dimensional stereoscopic image display apparatus according to an embodiment of the present invention;

Fig. 2 is a view showing a mixed state of an image according to the embodiment of the present invention;
Fig. 3 is a flowchart of a fade-out operation according to the embodiment of the present invention;
Fig. 4 is a view showing a display screen at the time of a fade-out process according to the embodiment of the present invention;
Fig. 5 is a flowchart of a fade-in operation according to the embodiment of the present invention;
Fig. 6 is a view showing a display screen at the time of a fade-out process according to the embodiment of the present invention;
Fig. 7 is a flowchart of the fade-out operation according to the embodiment of the present invention;
Fig. 8 is a flowchart of a fade-in operation according to the embodiment of the present invention;
Fig. 9 is a view showing a display screen at the time of a fade-out process according to the embodiment of the present invention;

Fig. 10 is a view showing a configuration of a three-dimensional stereoscopic image display apparatus according to the embodiment of the present invention;

Fig. 11 is a view to explain a method of mixing a CG image according to the embodiment of the present invention;

Fig. 12 is a view showing a method of generating image data of each view point according to the embodiment of the present invention;

Fig. 13 is a view showing a method of generating image data of each view point according to the embodiment of the present invention;

Fig. 14 is a flowchart showing processes at the time of fade-out operation according to the embodiment of the present invention;

Fig. 15 is a flowchart showing processes at the time of a fade-in operation according to the embodiment of the present invention;

Fig. 16 is a view showing a configuration of a three-dimensional stereoscopic image display apparatus according to the embodiment of the present invention;

Fig. 17 is a view to explain a method of mixing an image according to the embodiment of the present invention;

Fig. 18 is a view showing a method of generating image data of each view point according to the embodiment of the present invention;

Fig. 19 is a flowchart showing processes at the time of a fade-out operation according to the embodiment of the present invention;

Fig. 20 is a flowchart showing processes at the time of a fade-in operation according to the embodiment of the present invention;

Fig. 21 is a view showing a configuration of a three-dimensional stereoscopic image display apparatus according to another embodiment of the present invention;

Fig. 22 is a view showing a mixed state of an image according to the embodiment of the present invention;

Fig. 23 is a view to explain a process of generating a geometric figure according to the embodiment of the present invention;

Fig. 24 is a view to explain a process of compressing image data according to the embodiment of the present invention;

Fig. 25 is a flowchart showing processes of fade-in and fade-out operations according to the embodiment of the present invention;

Fig. 26 is a view showing a configuration of a three-dimensional stereoscopic image display apparatus according to the embodiment of the present invention;

Fig. 27 is a flowchart showing processes of fade-in and fade-out operations according to the embodiment of the present invention;

Fig. 28 is a flowchart showing processes of fade-in and fade-out operations according to the embodiment of the present invention;

Fig. 29 is a view to explain a process of generating a geometric figure according to another embodiment of the present invention;

Fig. 30 is a block diagram showing an architectural example of a personal computer according to the embodiment of the present invention;

Fig. 31 is a block diagram showing a configuration example of a video card according to the embodiment of the present invention;

Fig. 32 is a view to explain image switching according to the embodiment of the present invention; and

Fig. 33 is a view according to the embodiment of the present invention and 33(a) and 33(b) are views explaining image switching.

**Claims**

1. An image display apparatus which displays a right-eye image and a left-eye image on a display screen, the apparatus comprising:

   a display controlling means for controlling display of the right-eye image and the left-eye image on the display screen, wherein
   the display controlling means includes a means for controlling arrangement of the right-eye image and the left-eye image on the display screen so that the right-eye image and the left-eye image are moved away from each other in predetermined directions in a lapse of time in a fade-out process.

2. An image display apparatus according to claim 1, wherein
   the display controlling means further includes a means for controlling the right-eye image and the left-eye image so that their sizes are reduced from their original sizes with time in a lapse of time in the fade-out process.

3. An image display apparatus according to one of claims 1 and 2, wherein
   when a data-vacant portion is generated in a display region of the left-eye image and a display region of the right-eye image in the fade-out process, next left-eye image or right-eye image is applied to this data-vacant portion.

4. An image display apparatus which displays a right-eye image and a left-eye image on a display screen, the apparatus comprising:

   a display controlling means for controlling display of the right-eye image and the left-eye image on the display screen, wherein

the display controlling means includes a means for controlling arrangement of the right-eye image and the left-eye image on the display screen so that the right-eye image and the left-eye image are moved close to each other from predetermined directions in a lapse of time in a fade-in process.

**5.** An image display apparatus according to claim 4, wherein
the display controlling means further includes a means for controlling the right-eye image and the left-eye image so that their sizes are increased to their original sizes in a lapse of time in the fade-in process.

**6.** A program allowing a computer to execute a three-dimensional stereoscopic image display for displaying a right-eye image and a left-eye image on a display screen, the program having the computer execute:

a display controlling process for controlling display of the right-eye image and the left-eye image on the display screen, wherein
the display controlling process includes a process for controlling arrangement of the right-eye image and the left-eye image on the display screen so that the right-eye image and the left-eye image are moved away from each other in predetermined directions in a lapse of time in a fade-out process.

**7.** A program according to claim 6, wherein
the display controlling process further includes a process for controlling the right-eye image and the left-eye image so that sizes thereof are reduced from original sizes thereof in a lapse of time in the fade-out process.

**8.** A program according to claim 6 or 7, wherein
when a data-vacant portion is generated in a display region of the left-eye image and a display region of the right-eye image in the fade-out process, a next left-eye image or right-eye image is applied to this data-vacant portion.

**9.** A program allowing a computer to execute a three-dimensional stereoscopic image display for displaying a right-eye image and a left-eye image on a display screen, the program having the computer execute:

a display controlling process for controlling display of the right-eye image and the left-eye image on the display screen, wherein
the display controlling process comprises a process for controlling arrangement of the right-eye image and the left-eye image on the display screen so that the right-eye image and the left-eye image are moved close to each other from predetermined directions in a lapse of time in a fade-in process.

**10.** A program according to claim 9, wherein
the display controlling process further includes a process for controlling the right-eye image and the left-eye image so that sizes thereof are increased to original sizes thereof in a lapse of time in the fade-in process.

**11.** An image display apparatus which displays original image data in which subjects to be displayed are managed as objects, as a stereoscopic image, the apparatus comprising:

an object designating means for designating an object to be faded in or faded out from among the objects;
a transition effect setting means for setting a transition effect in the designated object;
a stereoscopic image data generating means for generating stereoscopic image data by using the object in which the transition effect is set and another object; and
a displaying means for displaying the generated stereoscopic image data.

**12.** An image display apparatus according to claim 11, wherein
the object designating means comprises means for determining anteroposterior relation of each object and selecting the object to be faded in or faded out based on the determined result.

**13.** An image display apparatus according to claim 11 to 12, wherein
the transition effect setting means include means for setting a transmissivity for the designated object, and the stereoscopic image data generating means include means for taking out display pixels of the designated object according to the set transmissivity and incorporating an object provided behind into the pixels after the display pixel data is taken out.

**14.** A program allowing a computer to execute to display original image data in which subjects to be displayed are managed as objects, as a stereoscopic image, the program having the computer execute:

an object designating process for designating an object to be faded in or faded out from among the objects;
a transition effect setting process for setting a transition effect in the designated object;
a stereoscopic image data generating process for generating stereoscopic image data by using the object in which the transition effect is set and another object; and
a displaying process for displaying the generated stereoscopic image data.

**15.** A program according to claim 14, wherein
the object designating process includes a process for determining an anteroposterior relation of each object and selecting the object to be faded in or faded out based on the determined result.

**16.** A program according to claim 14 to 15, wherein
the transition effect setting process includes a process for setting a transmissivity for the designated object, and
the stereoscopic image data generating process includes a process for taking out display pixels of the designated object according to the set transmissivity and incorporating an object provided behind into the pixels after the display pixel data is taken out.

**17.** An image display apparatus comprising:

a geometric figure providing means for providing information of a geometric figure provided when a display plane in a predetermined rotating state is viewed from a previously assumed view point in a case the display plane is quasi-turned so that one end of the display plane comes to a front side and the other end of the display plane goes to a rear side;
an image size changing means for changing a size of an image for each view point according to the geometric figure of the above view point; and
a display image generating means for generating a display image by mixing the image for each view point of which size is changed.

**18.** An image display apparatus according to claim 17, wherein
when the image for each view point is provided as image data for three-dimensional display, the image size changing means frames image data for two-dimensional display from the image data for each view point and acquires the image for each view point based on the image data for the two-dimensional display.

**19.** An image display apparatus according to claim 17 or 18, wherein
the processes by the image size changing means and the display image generating means are performed for the currently displayed image of each view point until an angle of the quasi-turning reaches 90°, and the processes by the image size changing means and the display image generating means are performed for the image of each view point which is to be displayed next until the angle of the quasi-turning reaches 180° from 90°.

**20.** An image display apparatus according to any one of claims 17 to 19, wherein
the geometric figure providing means includes a storing means for storing the geometric figure information of each view point so as to correspond to the rotation angle and sets the geometric figure information of each view point when the display plane is quasi-turned so that one end of the display plane comes to a front side and the other end of the display plane goes to a rear side, based on the geometric figure information stored in the storing means.

**21.** A program allowing a computer to execute display an image, the program having the computer execute:

a geometric figure providing process for providing information of a geometric figure provided when a display plane in a predetermined rotating state is viewed from a previously assumed view point in a case the display plane is quasi-turned so that one end of the display plane comes to a front side and the other end of the display plane goes to a rear side;
an image size changing process for changing a size of an image for each view point according to the geometric figure of the above view point; and
a display image generating process for generating a display image by mixing the image for each view point of which size is changed.

**22.** A program according to claim 21, wherein
when the image for each view point is provided as image data for three-dimensional stereoscopic display, the image size changing process frames image data for two-dimensional display from the image data for each view point and acquires the image for each view point based on the image data for the two-dimensional display.

**23.** A program according to claim 21 or 22, wherein
the processes by the image size changing process and the display image generating process are performed for the currently displayed image of each view point until an angle of the quasi-turning reaches 90°, and
the processes by the image size changing process and the display image generating process are performed for the image of each view point which is to be displayed next until an angle of the quasi-turning reaches 180° from 90°.

**24.** A program according to any one of claims 21 to 23, wherein
the geometric figure providing process includes a data base for storing the geometric figure information of each view point so as to correspond to the rotation angle and sets the geometric figure information of each view point when the display plane is quasi-turned so that one end of the display plane comes to a front side and the other end of the display plane goes to a rear side, based on the geometric figure information stored in the data base.

25. An image display apparatus which drives display based on image data, comprising:

a means for generating mixed image data by mixing a pixel value of currently displayed image data and a pixel value of image data to be displayed next by a designated ratio; and a display switch controlling means for designating the ratio so that the ratio of the pixel value of the currently displayed image data is gradually reduced to be finally 0% in a predetermined time when a stereoscopic image is switched to another stereoscopic image, the stereoscopic image is switched to a planar image, or the planar image is switched to the stereoscopic image.

26. An image display apparatus which drives display based on image data, comprising:

a means for changing a pixel value of currently displayed image data to a pixel value of image data to be displayed next; and a display switch controlling means for designating a switch pixel so that a ratio of the pixel value of the currently displayed image data is gradually reduced to be finally 0% in a predetermined time when a stereoscopic image is switched to another stereoscopic image, the stereoscopic image is switched to a planar image, or the planar image is switched to the stereoscopic image.

27. An image display apparatus according to claim 26, wherein
the display switch controlling means designates the switch pixel so that a width or the number of line-shaped or block-shaped regions is increased on a screen.

28. A program allowing a computer to function as:

a means for performing display based on image data;
a means for generating mixed image data by mixing a pixel value of currently displayed image data and a pixel value of image data to be displayed next by a designated ratio; and
a display switch controlling means for designating the ratio so that the ratio of the pixel value of the currently displayed image data is gradually reduced to be finally 0% in a predetermined time when a stereoscopic image is switched to another stereoscopic image, the stereoscopic image is switched to a planar image, or the planar image is switched to the stereoscopic image.

29. A program allowing a computer to function as:

a means for performing display based on image data;
a means for changing a pixel value of currently displayed image data to a pixel value of image data to be displayed next; and
a display switch controlling means for designating a switch pixel so that a ratio of the pixel value of the currently displayed image data is gradually reduced to be finally 0% in a predetermined time when a stereoscopic image is switched to another stereoscopic image, the stereoscopic image is switched to a planar image, or the planar image is switched to the stereoscopic image.

30. A program according to claim 29, wherein
the program allows the computer further to function as a means for designating the switch pixel so that a width or the number of line-shaped or block-shaped regions is increased on a screen.

FIG. 1

FIG. 2

FIG. 3

START

SHIFT AMOUNT SL IS CALCULATED FROM FADE-OUT SPEED  —— S101

L IMAGE DATA IS SHIFTED IN LEFT DIRECTION BY SHIFT AMOUNT SL AND MAPPED IN L IMAGE DATA REGION  —— S102

BACKGROUND IMAGE DATA IS MAPPED IN DATA-VACANT PORTION IN L IMAGE DATE REGION  —— S103

R IMAGE DATA IS SHIFTED IN RIGHT DIRECTION BY SHIFT AMOUNT S1 AND MAPPED IN R IMAGE DATA REGION ON GRAPHIC MEMORY  —— S104

BACKGROUND IMAGE DATA IS MAPPED IN DATA-VACANT PORTION IN R IMAGE DATA REGION  —— S105

IMAGE DATA ON GRAPHIC MEMORY IS DISPLAYED ON DISPLAY  —— S106

NO ← IS SHIFT FOR ONE SCREEN COMPLETED?  —— S107

YES

END

FIG. 4

MIXED IMAGE

L IMAGE

R IMAGE

FADE-OUT START

t

(a)  (b)  (c)

FIG. 5

```
                    START

            SHIFT AMOUNT SL IS CALCULATED          S111
            FROM FADE-IN SPEED

            DATA-VACANT PORTION CORRESPONDING       S112
            TO SHIFT AMOUNT SL EXISTS IN
            L IMAGE DATA REGION ON GRAPHIC MEMORY

            NEXT L IMAGE DATA IS MAPPED IN          S113
            DATA-VACANT PORTION

            DATA-VACANT PORTION CORRESPONDING       S114
            TO SHIFT AMOUNT SL EXISTS IN
            R IMAGE DATA REGION ON GRAPHIC MEMORY

            NEXT R IMAGE DATA IS MAPPED IN          S115
            DATA-VACANT PORTION

            IMAGE DATA ON GRAPHIC MEMORY IS         S116
            DISPLAYED ON DISPLAY

    NO          IS SHIFT FOR ONE SCREEN             S117
                COMPLETED?

                        YES

                    END
```

FIG. 6

MIXED IMAGE

FADE-OUT START

L IAMGE

R IAMGE

(a)    (b)    (c)

EP 1 628 490 A1

FIG. 7

EP 1 628 490 A1

```
                    ┌─────────┐
                    │  START  │
                    └─────────┘
                         │
                         ▼                                    S201
┌──────────────────────────────────────────────┐
│ REDUCTION RATIO R AND ARRANGEMENT POSITIONS    │
│ OF L IMAGE AND R IMAGE ARE CALCULATED          │◄───────────────┐
│ FROM FADE-OUT SPEED                            │                │
└──────────────────────────────────────────────┘                │
                         │                        S202            │
                         ▼                                        │
┌──────────────────────────────────────────────┐                │
│ L IMAGE DATE AND R IMAGE DATA ARE GENERATED    │                │
│ BY SCALING DOWN L IMAGE AND R IMAGE BY         │                │
│ REDUCTION RATIO R                              │                │
└──────────────────────────────────────────────┘                │
                         │                        S203            │
                         ▼                                        │
┌──────────────────────────────────────────────┐                │
│ SCALED-DOWN L IMAGE DATA IS MAPPED IN          │                │
│ ARRANGEMENT POSITION OF L IMAGE                │                │
│ ON GRAPHIC MEMORY                              │                │
└──────────────────────────────────────────────┘                │
                         │                        S204            │
                         ▼                                        │
┌──────────────────────────────────────────────┐                │
│ BACKGROUND IMAGE DATA IS MAPPED IN             │                │
│ DATA-VACANT PORTION OF L IMAGE DATA REGION     │                │
└──────────────────────────────────────────────┘                │
                         │                        S205            │
                         ▼                                        │
┌──────────────────────────────────────────────┐                │
│ SCALED-DOWN R IMAGE DATA IS MAPPED IN          │                │
│ ARRANGEMENT POSITION OF R IMAGE                │                │
│ ON GRAPHIC MEMORY                              │                │
└──────────────────────────────────────────────┘                │
                         │                        S206            │
                         ▼                                        │
┌──────────────────────────────────────────────┐                │
│ BACKGROUND IMAGE DATA IS MAPPED IN             │                │
│ DATA-VACANT PORTION OF R IMAGE DATA REGION     │                │
└──────────────────────────────────────────────┘                │
                         │                                        │
                         └────────────────────────────────────┐  │
                                                               │  │
                                                    S207       ▼  │
                    ┌──────────────────────────────────────────┐ │
                    │ IMAGE DATA ON GRAPHIC MEMORY IS DISPLAYED │ │
                    │ ON DISPLAY                                │ │
                    └──────────────────────────────────────────┘ │
                                       │                          │
                                       ▼              S208        │
                              ╱─────────────────────╲    NO       │
                             ╱  ARE PROCESSES FOR     ╲───────────┘
                             ╲  PREDETERMINED NUMBER  ╱
                              ╲ OF TIMES COMPLETED?  ╱
                               ╲───────────────────╱
                                       │ YES          S209
                                       ▼
                    ┌──────────────────────────────────────────┐
                    │ BACKGROUND IMAGE DATA IS MAPPED IN L IMAGE │
                    │ DATA REGION AND R IMAGE DATA REGION        │
                    └──────────────────────────────────────────┘
                                       │              S210
                                       ▼
                    ┌──────────────────────────────────────────┐
                    │ IMAGE DATA ON GRAPHIC MEMORY IS DISPLAYED │
                    │ ON DISPLAY                                │
                    └──────────────────────────────────────────┘
                                       │
                                       ▼
                                  ┌─────────┐
                                  │   END   │
                                  └─────────┘
```

# FIG. 8

START

IMAGE SIZE S AND ARRANGEMENT POSITIONS OF
L IMAGE AND R IMAGE ARE CALCULATED
FROM FADE-IN SPEED — S211

L IMAGE DATA AND R IMAGE DATA HAVING
IMAGE SIZE S ARE GENERATED — S212

SCALED-DOWN L IMAGE DATA IS MAPPED IN
ARRANGEMENT POSITION OF L IMAGE ON
GRAPHIC MEMORY — S213

SCALED-DOWN R IMAGE DATA IS
MAPPED IN ARRANGEMENT POSITION OF
R IMAGE ON GRAPHIC MEMORY — S214

IMAGE DATA ON GRAPHIC MEMORY IS
DISPLAYED ON DISPLAY — S215

IS REPLACEMENT OF L IMAGE
AND R IMAGE COMPLETED? — S216

NO

YES

END

# FIG. 9

# FIG. 10

# FIG. 11

FIG. 12

FIG. 13

L IMAGE DATA

(a) TRACE WITHOUT A PROCESS FOR EXPRESSING OBJECT B IN A TRANSPARENT MANNER

(b) TRACE WITH SETTING OBJECT B AS TRANSLUCENT

(c) TRACE WITH SETTING OBJECT B AS FULL-TRANSPARENT

FIG. 14

START

OBJECTS AND ANTEROPOSTERIOR RELATIONSHIP BETWEEN EACH OF OBJECTS ARE EXTRACTED — S301

OBJECT TO BE DELETED IS SET — S302

TRANSMISSIVITY OF OBJECT TO BE DELETED IS SET — S303

3D SPACE IS TRACED FROM L VIEW POINT AND IMAGE DATA FOR LEFT EYE IS GENERATED — S304

IMAGE DATA FOR LEFT EYE IS MAPPED IN L IMAGE ARRANGEMENT POSITION ON GRAPHIC MEMORY — S305

3D SPACE IS TRACED FROM R VIEW POINT AND IMAGE DATA FOR RIGHT EYE IS GENERATED — S306

COMPRESSED IMAGE DATA FOR RIGHT EYE IS MAPPED IN R IMAGE ARRANGEMENT POSITION ON GRAPHIC MEMORY — S307

IMAGE DATA ON GRAPHIC MEMORY IS DISPLAYED ON DISPLAY — S308

IS OBJECT TO BE DELETED COMPLETELY DELETED? — S309
NO
YES

ARE ALL OBJECTS DELETED? — S310
NO
YES

END

EP 1 628 490 A1

40

# FIG. 15

```
START
  │
  ▼
┌─────────────────────────────────┐
│ OBJECTS AND ANTEROPOSTERIOR      │  S321
│ RELATIONSHIP BETWEEN EACH OF     │
│ OBJECTS ARE TRACED               │
└─────────────────────────────────┘
  │
  ▼
┌─────────────────────────────────┐
│ OBJECT TO APPEAR IS SET          │  S322
└─────────────────────────────────┘
  │
  ▼
┌─────────────────────────────────┐
│ TRANSMISSIVITY OF OBJECT TO      │  S323
│ APPEAR IS SET                    │
└─────────────────────────────────┘
  │
  ▼
┌─────────────────────────────────┐
│ 3D SPACE IS TRACED FROM L VIEW   │  S324
│ POINT AND IMAGE DATA FOR LEFT    │
│ EYE IS GENERATED                 │
└─────────────────────────────────┘
  │
  ▼
┌─────────────────────────────────┐
│ IMAGE DATA FOR LEFT EYE IS       │  S325
│ MAPPED IN L IMAGE ARRANGEMENT    │
│ POSITION ON GRAPHIC MEMORY       │
└─────────────────────────────────┘
  │
  ▼
┌─────────────────────────────────┐
│ 3D SPACE IS TRACED FROM R VIEW   │  S326
│ POINT AND IMAGE DATA FOR RIGHT   │
│ EYE IS GENERATED                 │
└─────────────────────────────────┘
  │
  ▼
┌─────────────────────────────────┐
│ IMAGE DATA FOR RIGHT EYE IS      │  S327
│ MAPPED IN R IMAGE ARRANGEMENT    │
│ POSITION ON GRAPHIC MEMORY       │
└─────────────────────────────────┘
  │
  ▼
┌─────────────────────────────────┐
│ IMAGE DATA ON GRAPHIC MEMORY     │  S328
│ IS DISPLAYED ON DISPLAY          │
└─────────────────────────────────┘
  │
  ▼
◇ OBJECT TO APPEAR COMPLETELY APPEARED?  S329
  │ NO ──▶ (loop back to S323)
  │ YES
  ▼
◇ ALL OBJECTS APPEAR?  S330
  │ NO ──▶ (loop back to S322)
  │ YES
  ▼
END
```

41

FIG. 16

201
INPUT
DEVICE

208
DISPLAY

202
COMMAND
INPUT UNIT

203
CONTROL
UNIT

221
DECODE
PROCESS
UNIT

222
TRANSITION
EFFECT
CONTROL UNIT

223
MIXED IMAGE
GENERATION
UNIT

207
DISPLAY
CONTROL
UNIT

224
MEMORY
UNIT

IMAGE FILE

210
EXPANSION
MEMORY

211
GRAPHIC
MEMORY

EP 1 628 490 A1

42

# FIG. 17

OBJECT A

BACKGROUND IMAGE

OBJECT B

OBJECT C

MIXED IMAGE

FIG. 18

OBJECT A

OUTSIDE OF OUTLINE=TRANSMISSIVITY 100%

OUTLINE OF OBJECT=TRANSMISSIVITY 0%

OBJECT B

DATA MAPPING

OUTLINE OF OBJECT=TRANSMISSIVITY 50%

OUTSIDE OF OUTLINE=TRANSMISSIVITY 100%

EP 1 628 490 A1

FIG. 19

START

OBJECTS AND ANTEROPOSTERIOR RELATIONSHIP BETWEEN EACH OF OBJECTS ARE EXTRACTED — S401

OBJECT TO BE DELETED IS SET — S402

TRANSMISSIVITY OF OBJECT TO BE DELETED IS SET — S403

IMAGE DATA FOR LEFT EYE IS GENERATED BASED ON ANTEROPOSTERIOR RELATIONSHIP BETWEEN OBJECTS AND TRANSMISSIVITY OF OBJECT TO BE DELETED — S404

IMAGE DATA FOR LEFT EYE IS MAPPED IN L IMAGE ARRANGEMENT POSITION ON GRAPHIC MEMORY — S405

IMAGE DATA FOR RIGHT EYE IS GENERATED BASED ON ANTEROPOSTERIOR RELATIONSHIP AND TRANSMISSIVITY OF OBJECT TO BE DELETED — S406

IMAGE DATA FOR RIGHT EYE IS MAPPED IN R IMAGE ARRANGEMENT POSITION ON GRAPHIC MEMORY — S407

IMAGE DATA ON GRAPHIC MEMORY IS DISPLAYED ON DISPLAY — S408

IS OBJECT TO BE DELETED COMPLETELY DELETED? — S409
NO
YES

ARE ALL OBJECTS DELETED? — S410
NO
YES

END

# FIG. 20

START

S401 OBJECTS AND ANTEROPOSTERIOR RELATIONSHIP BETWEEN EACH OF OBJECTS ARE EXTRACTED

S402 OBJECT TO APPEAR IS SET

S403 TRANSMISSIVITY OF OBJECT TO APPEAR IS SET

S404 IMAGE DATA FOR LEFT EYE IS GENERATED BASED ON ANTEROPOSTERIOR RELATIONSHIP BETWEEN OBJECTS AND TRANSMISSIVITY OF OBJECT TO APPEAR

S405 IMAGE DATA FOR LEFT EYE IS MAPPED IN L IMAGE ARRANGEMENT POSITION ON GRAPHIC MEMORY

S406 IMAGE DATA FOR RIGHT EYE IS GENERATED BASED ON ANTEROPOSTERIOR RELATIONSHIP BETWEEN OBJECTS AND TRANSMISSIVITY OF OBJECT TO APPEAR

S407 IMAGE DATA FOR RIGHT EYE IS MAPPED IN R IMAGE ARRANGEMENT POSITION ON GRAPHIC MEMORY

S428 IMAGE DATA ON GRAPHIC MEMORY IS DISPLAYED ON DISPLAY

S429 OBJECT TO APPEAR COMPLETELY APPEARED?   NO / YES

S430 ALL OBJECTS APPEARED?   NO / YES

END

# FIG. 21

# FIG. 22

**FIG. 23**

FIG. 24

ORIGINAL IMAGE

COMPRESS TO HALF
IN LATERAL DIRECTION

L IMAGE

R IMAGE

COMPRESSION, MIX

R L R L R L R L R L R L R L R L R L R L R L R L

# FIG. 25

START

S501: IMAGE DATA FOR LEFT EYE AND IMAGE DATA FOR RIGHT EYE ARE GENERATED FROM CURRENTLY REPRODUCED TWO-DIMENSIONAL IMAGE DATA AND EXPANDED ON MEMORY

S502: IMAGE DATA FOR LEFT EYE AND IMAGE DATA FOR RIGHT EYE ARE GENERATED FROM TWO-DIMENSIONAL IMAGE DATA TO BE REPRODUCED NEXT AND EXPANDED ON MEMORY

S503: ROTATION ANGLE OF IMAGE PLANE IS SET

S504: GEOMETRIC FIGURE INFORMATION OF L IMAGE PLANE AND R IMAGE PLANE IS CALCULATED ACCORDING TO ROTATION ANGLE

S505: ROTATION ANGLE>90° ?

ROTATION ANGLE<90°

S506: CURRENTLY REPRODUCED IMAGE IS SELECTED

ROTATION ANGLE>90°

S507: IMAGE TO BE REPRODUCED NEXT IS SELECTED

S508: SELECTED IMAGE DATA FOR LEFT EYE AND IMAGE DATA FOR RIGHT EYE ARE NON-LINEARLY COMPRESSED BASED ON GEOMETRIC FIGURE INFORMATION

S509: COMPRESSED IMAGE DATA FOR LEFT EYE IS MAPPED IN L IMAGE ARRANGEMENT POSITION ON GRAPHIC MEMORY

S510: BACKGROUND IMAGE DATA IS MAPPED IN DATA-VACANT PORTION IN L IMAGE DATA REGION

S511: COMPRESSED IMAGE DATA FOR RIGHT EYE IS MAPPED IN R IMAGE ARRANGEMENT POSITION ON GRAPHIC MEMORY

S512: BACKGROUND IMAGE DATA IS MAPPED IN DATA-VACANT PORTION OF R IMAGE DATA

S513: IMAGE DATA ON GRAPHIC MEMORY IS DISPLAYED ON DISPLAY

S514: ROTATED BY 180 DEGREES?

NO

YES

END

FIG. 26

EP 1 628 490 A1

FIG. 27

EP 1 628 490 A1

```
                        ┌─────────┐
                        │  START  │
                        └────┬────┘
                             │                          S501
        ┌────────────────────▼────────────────────────┐
        │ IMAGE DATA FOR LEFT EYE AND IMAGE DATA FOR   │
        │ RIGHT EYE ARE GENERATED FROM CURRENTLY       │
        │ REPRODUCED TWO-DIMENSIONAL IMAGE DATA AND    │
        │ EXPANDED ON MEMORY                           │
        └────────────────────┬────────────────────────┘   S502
        ┌────────────────────▼────────────────────────┐
        │ IMAGE DATA FOR LEFT EYE AND IMAGE DATA FOR   │
        │ RIGHT EYE ARE GENERATED FROM TWO-            │
        │ DIMENSIONAL IMAGE DATA TO BE REPRODUCED      │
        │ NEXT AND EXPANDED ON MEMORY                  │
        └────────────────────┬────────────────────────┘   S503
        ┌────────────────────▼────────────────────────┐
    ┌──▶│   ROTATION ANGLE OF IMAGE PLANE IS SET       │
    │   └────────────────────┬────────────────────────┘   S504
    │   ┌────────────────────▼────────────────────────┐
    │   │ GEOMETRIC FIGURE INFORMATION OF L IMAGE      │
    │   │ PLANE AND R IMAGE PLANE CORRESPONDING TO     │
    │   │ ROTATION ANGLE IS READ OUT                   │
    │   └────────────────────┬────────────────────────┘
    │          S505          │
    │ ROTATION ANGLE<90° ┌───▼──────────────┐ ROTATION ANGLE>90°
    │   ◀────────────────│ ROTATION ANGLE>90°?│─────────────────▶
    │   ┌────────────────┴──┐          ┌──────┴─────────┐
    │   │ S506              │          │ S507           │
    │   │ CURRENTLY         │          │ IMAGE TO BE    │
    └───│ REPRODUCED IMAGE  │          │ REPRODUCED NEXT│◀──
        │ IS SELECTED       │          │ IS SELECTED    │
        └───────────────────┘          └────────────────┘   S508
        ┌────────────────────────────────────────────────┐
        │ SELECTED IMAGE DATA FOR LEFT EYE AND IMAGE      │
        │ DATA FOR RIGHT EYE ARE NON-LINEARLY             │
        │ COMPRESSED BASED ON GEOMETRIC FIGURE INFORMATION│
        └────────────────────────────────────────────────┘
```

```
                                                        S509
        ┌──────────────────────────────────────────────┐
        │ COMPRESSED IMAGE DATA FOR LEFT EYE IS MAPPED IN│
        │ L IMAGE ARRANGEMENT POSITION ON GRAPHIC MEMORY │
        └───────────────────┬──────────────────────────┘   S510
        ┌───────────────────▼──────────────────────────┐
        │ BACKGROUND IMAGE DATA IS MAPPED IN DATA-VACANT│
        │ PORTION OF L IMAGE DATA REGION                │
        └───────────────────┬──────────────────────────┘   S511
        ┌───────────────────▼──────────────────────────┐
        │ COMPRESSED IMAGE DATA FOR RIGHT EYE IS MAPPED IN│
        │ R IMAGE ARRANGEMENT POSITION ON GRAPHIC MEMORY │
        └───────────────────┬──────────────────────────┘   S512
        ┌───────────────────▼──────────────────────────┐
        │ BACKGROUND IMAGE DATA IS MAPPED IN DATA-VACANT│
        │ PORTION OF R IMAGE DATA REGION                │
        └───────────────────┬──────────────────────────┘   S513
        ┌───────────────────▼──────────────────────────┐
        │ IMAGE DATA ON GRAPHIC MEMORY IS DISPLAYED ON  │
        │ DISPLAY                                       │
        └───────────────────┬──────────────────────────┘
                            │                           S514
              NO       ◇────▼─────────────────◇
        ◀──────────────│ ROTATED BY 180 DEGREES? │
                       ◇──────────┬────────────◇
                                  │ YES
                            ┌─────▼─────┐
                            │    END    │
                            └───────────┘
```

FIG. 28

EP 1 628 490 A1

START

NEXT L IMAGE DATA AND R IMAGE DATA ARE READ OUT AND EXPANDED ON MEMORY  — S501

IMAGE DATA FOR LEFT EYE AND IMAGE DATA FOR RIGHT EYE ARE GENERATED FROM L IMAGE DATA AND R IMAGE DATA  — S502

ROTATION ANGLE OF IMAGE PLANE IS SET  — S503

GEOMETRIC FIGURE INFORMATION OF L IMAGE PLANE AND R IMAGE PLANE IS CALCULATED ACCORDING TO ROTATION ANGLE  — S504

ROTATION ANGLE>90° ?  — S505

ROTATION ANGLE<90° / ROTATION ANGLE>90°

S506 — CURRENTLY REPRODUCED IMAGE IS SELECTED

S507 — IMAGE TO BE REPRODUCED NEXT IS SELECTED

GENERATED IMAGE DATA FOR LEFT EYE AND IMAGE DATA FOR RIGHT EYE ARE NON-LINEARLY COMPRESSED BASED ON GEOMETRIC FIGURE INFORMATION  — S508

COMPRESSED IMAGE DATA FOR LEFT EYE IS MAPPED IN L IMAGE ARRANGEMENT POSITION ON GRAPHIC MEMORY  — S509

BACKGROUND IMAGE DATA IS MAPPED IN DATA-VACANT PORTION OF L IMAGE DATA REGION  — S510

COMPRESSED IMAGE DATA FOR RIGHT EYE IS MAPPED IN R IMAGE ARRANGEMENT POSITION ON GRAPHIC MEMORY  — S511

BACKGROUND IMAGE DATA IS MAPPED IN DATA-VACANT PORTION OF R IMAGE DATA REGION  — S512

IMAGE DATA ON GRAPHIC MEMORY IS DISPLAYED ON DISPLAY  — S513

ROTATED BY 180 DEGREES?  — S514

NO

YES

END

FIG. 29

DISPLAY PLANE

VIEW POINT ① ② ③ ④    ① ② ③ ④

VIEW POINT 1 PLANE

VIEW POINT 2 PLANE

VIEW POINT 3 PLANE

VIEW POINT 4 PLANE

(a)    (b)

FIG. 30

CPU ~1

VIDEO CARD ⟨AGP⟩ NORTH BRIDGE MEMORY ~4

HDD SOUTH BRIDGE USB ~6

CD-ROM

FIG. 31

PERSONAL COMPUTER MONITOR ← VIDEO BUFFER ← DAC ⟸ VRAM CONTROLLER ⟺ VRAM

AGP

CPU ~1

FIG. 32

CURRENTLY DISPLAYED
IMAGE 2D

IMAGE 3D
TO BE DISPLAYED
NEXT

2D:100%
3D:0%

2D:67%
3D:33%

2D:33%
3D:67%

2D:0%
3D:100%

FIG. 33

IMAGE 1

IMAGE 2

(a)

(b)

(c)

(d)

(e)

| **INTERNATIONAL SEARCH REPORT** | International application No. |
|---|---|
| | PCT/JP2004/007185 |

**A. CLASSIFICATION OF SUBJECT MATTER**
Int.Cl⁷ H04N13/04, H04N5/262

According to International Patent Classification (IPC) or to both national classification and IPC

**B. FIELDS SEARCHED**

Minimum documentation searched (classification system followed by classification symbols)
Int.Cl⁷ H04N13/04, H04N5/262

Documentation searched other than minimum documentation to the extent that such documents are included in the fields searched
Jitsuyo Shinan Koho        1922–1996   Toroku Jitsuyo Shinan Koho   1994–2004
Kokai Jitsuyo Shinan Koho   1971–2004   Jitsuyo Shinan Toroku Koho    1996–2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 09-289638 A (NEC Corp.), 04 November, 1997 (04.11.97), Fig. 25 & US 611979 A | 11–16 |
| Y | JP 2003-158750 A (Mitsubishi Electric Corp.), 30 May, 2003 (30.05.03), Par. Nos. [0014] to [0015] (Family: none) | 11–16 |
| Y | JP 2002-073003 A (Namco Ltd.), 12 March, 2002 (12.03.02), Fig. 18 (Family: none) | 17–24 |

☒ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 August, 2004 (24.08.04) | 14 September, 2004 (14.09.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2004/007185

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-331700 A (Sony Corp.),<br>30 November, 1999 (30.11.99),<br>Fig. 9<br>& GB 2339358 A     & US 6563497 B | 17-24 |
| X<br>Y<br>A | JP 07-212798 A (Sharp Corp.),<br>11 August, 1995 (11.08.95),<br>Par. Nos. [0026] to [0027]<br>(Family: none) | 25,26,28,29<br>27,30<br>1-10 |
| Y | JP 2002-152590 A (Canon Inc.),<br>24 May, 2002 (24.05.02),<br>Fig. 2<br>(Family: none) | 27,30 |
| A | JP 11-164328 A (Toshiba Corp.),<br>18 June, 1999 (18.06.99),<br>Figs. 3, 4<br>(Family: none) | 25-30 |

Form PCT/ISA/210 (continuation of second sheet) (January 2004)

**INTERNATIONAL SEARCH REPORT**

| International application No. |
|---|
| PCT/JP2004/007185 |

---

**Box No. II      Observations where certain claims were found unsearchable (Continuation of item 2 of first sheet)**

This international search report has not been established in respect of certain claims under Article 17(2)(a) for the following reasons:

1. ☐  Claims Nos.:
   because they relate to subject matter not required to be searched by this Authority, namely:

2. ☐  Claims Nos.:
   because they relate to parts of the international application that do not comply with the prescribed requirements to such an extent that no meaningful international search can be carried out, specifically:

3. ☐  Claims Nos.:
   because they are dependent claims and are not drafted in accordance with the second and third sentences of Rule 6.4(a).

---

**Box No. III      Observations where unity of invention is lacking (Continuation of item 3 of first sheet)**

This International Searching Authority found multiple inventions in this international application, as follows:
   I. The inventions of claims 1-10 relate to an image display device and a program for changing an image in the depth direction by changing the parallax during fade-out and fade-in processing.
   II. The inventions of claims 11-16 relate to an image display device and a program for setting a transient effect (transmission ratio of object) on an object for which fade-out/fade-in has been specified and do not relate to changing of the image in the depth direction.

   (Continued to extra sheet) .

1. ☒  As all required additional search fees were timely paid by the applicant, this international search report covers all searchable claims.

2. ☐  As all searchable claims could be searched without effort justifying an additional fee, this Authority did not invite payment of any additional fee.

3. ☐  As only some of the required additional search fees were timely paid by the applicant, this international search report covers only those claims for which fees were paid, specifically claims Nos.:

4. ☐  No required additional search fees were timely paid by the applicant.   Consequently, this international search report is restricted to the invention first mentioned in the claims; it is covered by claims Nos.:

**Remark on Protest**     ☐  The additional search fees were accompanied by the applicant's protest.

                      ☒  No protest accompanied the payment of additional search fees.

Form PCT/ISA/210 (continuation of first sheet (2)) (January 2004)

**INTERNATIONAL SEARCH REPORT**

International application No.

PCT/JP2004/007185

Continuation of Box No.III of continuation of first sheet(2)

III. The inventions of claims 17-24 relate to an image display device and a program for providing geographical information which is observed when viewed from a predetermined viewpoint when the display plane is subjected to pseudo-rotation in the forward-backward direction and do not relate to the changing of the image in the depth direction.

IV. The inventions of claims 25-30 relate to an image display device and a program for gradually changing the pixel value ratio of the current display data and the next display data in switching between the 3-dimensional video and the 2-dimensional video and do not relate to changing of the image in the depth direction.

Accordingly, these four groups of inventions are not so linked as to form a single general inventive concept.

Form PCT/ISA/210 (extra sheet) (January 2004)